# EUROPEAN PATENT APPLICATION

(11) **EP 3 460 662 A1**
(43) Date of publication of application: **27.03.2019**
(21) Application number: 18191343.5
(22) Date of filing: 28.08.2018
(51) Int. Cl.: G06F 9/50

(54) **TECHNOLOGIES FOR OFFLOADING I/O INTENSIVE OPERATIONS TO A DATA STORAGE SLED**

(30) Priority: 29.09.2017 US 201715720236; 30.08.2017 IN 201741030632
(71) Applicant: INTEL Corporation, Santa Clara, CA 95054 (US)
(72) Inventor: BERNAT, Francesc Guim, 08036 Barcelona (ES); KUMAR, Karthik, Chandler, AZ Arizona 85249 (US); SCHMISSEUR, Mark A., Chandler, AZ Arizona 85048 (US); WILLHALM, Thomas, 69207 Sandhausen (DE)
(74) Representative: Rummler, Felix

(57) **Abstract**

Technologies for offloading I/O intensive workload phases to a data storage sled include a compute sled. The compute sled is to execute a workload that includes multiple phases. Each phase is indicative of a different resource utilization over a time period. Additionally, the compute sled is to identify an I/O intensive phase of the workload, wherein the amount of data to be communicated through a network path between the compute sled and the data storage sled to execute the I/O intensive phase satisfies a predefined threshold. The compute sled is also to migrate the workload to the data storage sled to execute the I/O intensive phase locally on the data storage sled. Other embodiments as also described and claimed.

## Description

### CROSS-REFERENCE TO RELATED APPLICATIONS

The present application claims the benefit of U.S. Provisional Patent Application No. 62/427,268, filed November 29, 2016 and Indian Provisional Patent Application No. 201741030632, filed August 30, 2017.

### BACKGROUND

Typically, in systems in which data is accessed by a compute device from remote data storage (e.g., data stored at a location remote from the compute device within a data center), the network can become congested when the amount of data requested is relatively large. As such, other compute devices may be unable to perform operations that also require the communication of relatively large amounts of data through the network in a timely manner (e.g., in accordance with a latency or throughput target specified in a service level agreement with a customer). In other words, the network may become a bottleneck for the execution of workloads in the data center and the compute resources (e.g., processors) of the compute devices may be wasted as those resources sit idle waiting for requested data to arrive. To remedy such situations, an operator of the data center may spend monetary resources to install a higher throughput network. However, in many instances, the capacity of the higher throughput network may go largely unused, as the times when multiple workloads are concurrently in I/O intensive phases (e.g., periods of high network utilization to access remote data storage) may occur only a small percentage of the total time that the data center is in use.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a diagram of a conceptual overview of a data center in which one or more techniques described herein may be implemented according to various embodiments;
FIG. 2 is a diagram of an example embodiment of a logical configuration of a rack of the data center of FIG. 1;
FIG. 3 is a diagram of an example embodiment of another data center in which one or more techniques described herein may be implemented according to various embodiments;
FIG. 4 is a diagram of another example embodiment of a data center in which one or more techniques described herein may be implemented according to various embodiments;
FIG. 5 is a diagram of a connectivity scheme representative of link-layer connectivity that may be established among various sleds of the data centers of FIGS. 1, 3, and 4;
FIG. 6 is a diagram of a rack architecture that may be representative of an architecture of any particular one of the racks depicted in FIGS. 1-4 according to some embodiments;
FIG. 7 is a diagram of an example embodiment of a sled that may be used with the rack architecture of FIG. 6;
FIG. 8 is a diagram of an example embodiment of a rack architecture to provide support for sleds featuring expansion capabilities;
FIG. 9 is a diagram of an example embodiment of a rack implemented according to the rack architecture of FIG. 8;
FIG. 10 is a diagram of an example embodiment of a sled designed for use in conjunction with the rack of FIG. 9;
FIG. 11 is a diagram of an example embodiment of a data center in which one or more techniques described herein may be implemented according to various embodiments;
FIG. 12 is a simplified block diagram of at least one embodiment of a system for migrating an I/O intensive phase of a workload from a compute sled to a data storage sled;
FIG. 13 is a simplified block diagram of at least one embodiment of a compute sled of the system of FIG. 12;
FIG. 14 is a simplified block diagram of at least one embodiment of a data storage sled of the system of FIG. 13;
FIG. 15 is a simplified block diagram of at least one embodiment of an environment that may be established by the compute sled of FIGS. 12 and 13;
FIG. 16 is a simplified block diagram of at least one embodiment of an environment that may be established by the data storage sled of FIGS. 12 and 14;
FIGS. 17-18 are a simplified flow diagram of at least one embodiment of a method for migrating an I/O intensive phase of a workload to a data storage sled that may be performed by the compute sled of FIGS. 12 and 13;
FIGS. 19-20 are a simplified flow diagram of at least one embodiment of a method for accelerating an I/O intensive phase of a workload from a compute sled that may be performed by the data storage sled of FIGS. 12 and 14; and
FIG. 21 is a simplified diagram of phases of execution of a workload, the sleds on which the workload is executed in each phase, and the amount of data operated on in each phase.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

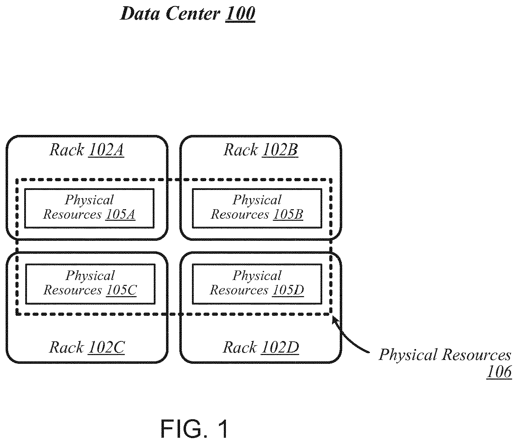

FIG. 1 illustrates a conceptual overview of a data center 100 that may generally be representative of a data center or other type of computing network in/for which one or more techniques described herein may be implemented according to various embodiments. As shown in FIG. 1, data center 100 may generally contain a plurality of racks, each of which may house computing equipment comprising a respective set of physical resources. In the particular non-limiting example depicted in FIG. 1, data center 100 contains four racks 102A to 102D, which house computing equipment comprising respective sets of physical resources (PCRs) 105A to 105D. According to this example, a collective set of physical resources 106 of data center 100 includes the various sets of physical resources 105A to 105D that are distributed among racks 102A to 102D. Physical resources 106 may include resources of multiple types, such as - for example - processors, co-processors, accelerators, field programmable gate arrays (FPGAs), memory, and storage. The embodiments are not limited to these examples.

The illustrative data center 100 differs from typical data centers in many ways. For example, in the illustrative embodiment, the circuit boards ("sleds") on which components such as CPUs, memory, and other components are placed for increased thermal performance. In particular, in the illustrative embodiment, the sleds are shallower than typical boards. In other words, the sleds are shorter from the front to the back, where cooling fans are located. This decreases the length of the path that air must to travel across the components on the board. Further, the components on the sled are spaced further apart than in typical circuit boards, and the components are arranged to reduce or eliminate shadowing (i.e., one component in the air flow path of another component). In the illustrative embodiment, processing components such as the processors are located on a top side of a sled while near memory, such as DIMMs, are located on a bottom side of the sled. As a result of the enhanced airflow provided by this design, the components may operate at higher frequencies and power levels than in typical systems, thereby increasing performance. Furthermore, the sleds are configured to blindly mate with power and data communication cables in each rack 102A, 102B, 102C, 102D, enhancing their ability to be quickly removed, upgraded, reinstalled, and/or replaced. Similarly, individual components located on the sleds, such as processors, accelerators, memory, and data storage drives, are configured to be easily upgraded due to their increased spacing from each other. In the illustrative embodiment, the components additionally include hardware attestation features to prove their authenticity.

Furthermore, in the illustrative embodiment, the data center 100 utilizes a single network architecture ("fabric") that supports multiple other network architectures including Ethernet and Omni-Path. The sleds, in the illustrative embodiment, are coupled to switches via optical fibers, which provide higher bandwidth and lower latency than typical twisted pair cabling (e.g., Category 5, Category 5e, Category 6, etc.). Due to the high bandwidth, low latency interconnections and network architecture, the data center 100 may, in use, pool resources, such as memory, accelerators (e.g., graphics accelerators, FPGAs, ASICs, etc.), and data storage drives that are physically disaggregated, and provide them to compute resources (e.g., processors) on an as needed basis, enabling the compute resources to access the pooled resources as if they were local. The illustrative data center 100 additionally receives utilization information for the various resources, predicts resource utilization for different types of workloads based on past resource utilization, and dynamically reallocates the resources based on this information.

The racks 102A, 102B, 102C, 102D of the data center 100 may include physical design features that facilitate the automation of a variety of types of maintenance tasks. For example, data center 100 may be implemented using racks that are designed to be robotically-accessed, and to accept and house robotically-manipulatable resource sleds. Furthermore, in the illustrative embodiment, the racks 102A, 102B, 102C, 102D include integrated power sources that receive a greater voltage than is typical for power sources. The increased voltage enables the power sources to provide additional power to the components on each sled, enabling the components to operate at higher than typical frequencies.

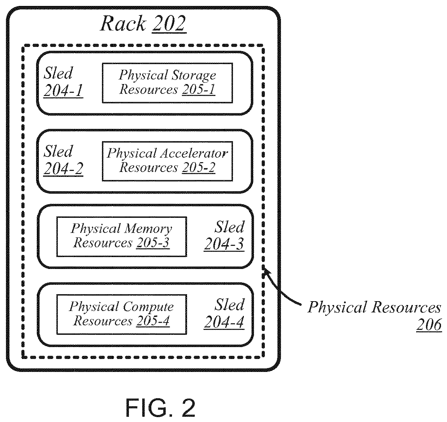

FIG. 2 illustrates an exemplary logical configuration of a rack 202 of the data center 100. As shown in FIG. 2, rack 202 may generally house a plurality of sleds, each of which may comprise a respective set of physical resources. In the particular non-limiting example depicted in FIG. 2, rack 202 houses sleds 204-1 to 204-4 comprising respective sets of physical resources 205-1 to 205-4, each of which constitutes a portion of the collective set of physical resources 206 comprised in rack 202. With respect to FIG. 1, if rack 202 is representative of - for example - rack 102A, then physical resources 206 may correspond to the physical resources 105A comprised in rack 102A. In the context of this example, physical resources 105A may thus be made up of the respective sets of physical resources, including physical storage resources 205-1, physical accelerator resources 205-2, physical memory resources 205-3, and physical compute resources 205-4 comprised in the sleds 204-1 to 204-4 of rack 202. The embodiments are not limited to this example. Each sled may contain a pool of each of the various types of physical resources (e.g., compute, memory, accelerator, storage). By having robotically accessible and robotically manipulatable sleds comprising disaggregated resources, each type of resource can be upgraded independently of each other and at their own optimized refresh rate.

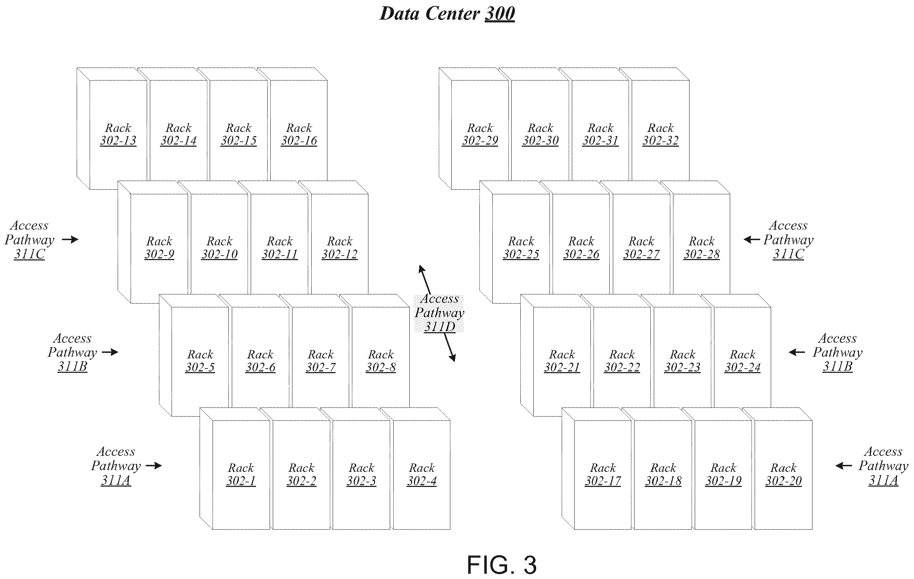

FIG. 3 illustrates an example of a data center 300 that may generally be representative of one in/for which one or more techniques described herein may be implemented according to various embodiments. In the particular non-limiting example depicted in FIG. 3, data center 300 comprises racks 302-1 to 302-32. In various embodiments, the racks of data center 300 may be arranged in such fashion as to define and/or accommodate various access pathways. For example, as shown in FIG. 3, the racks of data center 300 may be arranged in such fashion as to define and/or accommodate access pathways 311A, 311B, 311C, and 311D. In some embodiments, the presence of such access pathways may generally enable automated maintenance equipment, such as robotic maintenance equipment, to physically access the computing equipment housed in the various racks of data center 300 and perform automated maintenance tasks (e.g., replace a failed sled, upgrade a sled). In various embodiments, the dimensions of access pathways 311A, 311B, 311C, and 311D, the dimensions of racks 302-1 to 302-32, and/or one or more other aspects of the physical layout of data center 300 may be selected to facilitate such automated operations. The embodiments are not limited in this context.

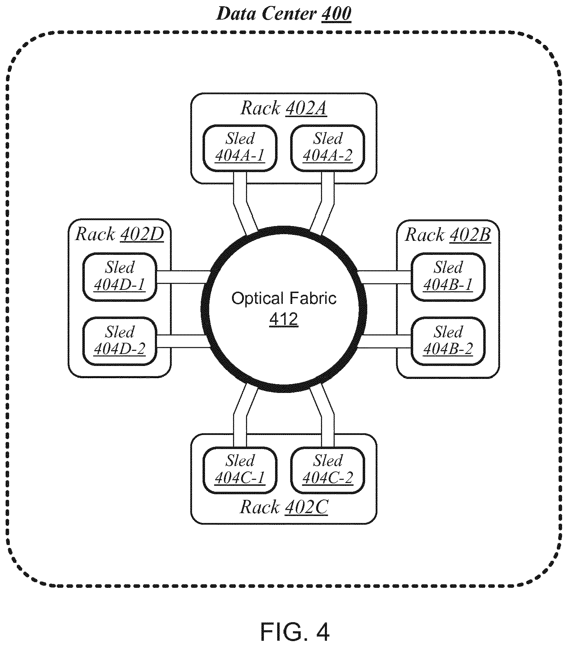

FIG. 4 illustrates an example of a data center 400 that may generally be representative of one in/for which one or more techniques described herein may be implemented according to various embodiments. As shown in FIG. 4, data center 400 may feature an optical fabric 412. Optical fabric 412 may generally comprise a combination of optical signaling media (such as optical cabling) and optical switching infrastructure via which any particular sled in data center 400 can send signals to (and receive signals from) each of the other sleds in data center 400. The signaling connectivity that optical fabric 412 provides to any given sled may include connectivity both to other sleds in a same rack and sleds in other racks. In the particular non-limiting example depicted in FIG. 4, data center 400 includes four racks 402A to 402D. Racks 402A to 402D house respective pairs of sleds 404A-1 and 404A-2, 404B-1 and 404B-2, 404C-1 and 404C-2, and 404D-1 and 404D-2. Thus, in this example, data center 400 comprises a total of eight sleds. Via optical fabric 412, each such sled may possess signaling connectivity with each of the seven other sleds in data center 400. For example, via optical fabric 412, sled 404A-1 in rack 402A may possess signaling connectivity with sled 404A-2 in rack 402A, as well as the six other sleds 404B-1, 404B-2, 404C-1, 404C-2, 404D-1, and 404D-2 that are distributed among the other racks 402B, 402C, and 402D of data center 400. The embodiments are not limited to this example.

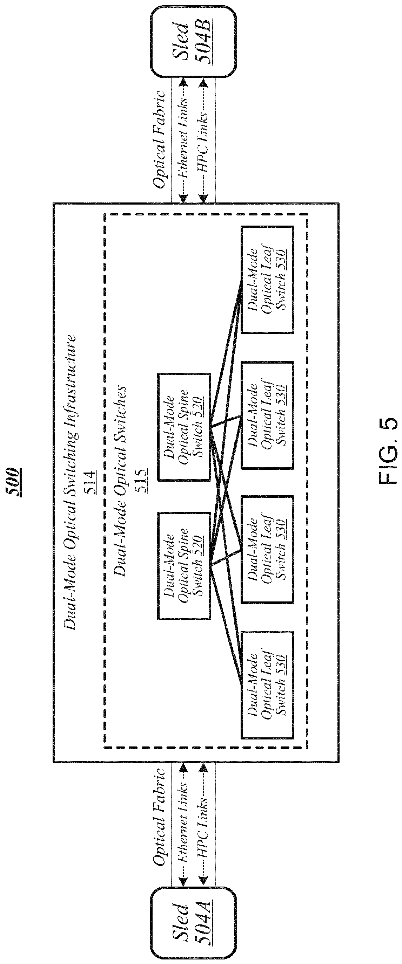

FIG. 5 illustrates an overview of a connectivity scheme 500 that may generally be representative of link-layer connectivity that may be established in some embodiments among the various sleds of a data center, such as any of example data centers 100, 300, and 400 of FIGS. 1, 3, and 4. Connectivity scheme 500 may be implemented using an optical fabric that features a dual-mode optical switching infrastructure 514. Dual-mode optical switching infrastructure 514 may generally comprise a switching infrastructure that is capable of receiving communications according to multiple link-layer protocols via a same unified set of optical signaling media, and properly switching such communications. In various embodiments, dual-mode optical switching infrastructure 514 may be implemented using one or more dual-mode optical switches 515. In various embodiments, dual-mode optical switches 515 may generally comprise high-radix switches. In some embodiments, dual-mode optical switches 515 may comprise multi-ply switches, such as four-ply switches. In various embodiments, dual-mode optical switches 515 may feature integrated silicon photonics that enable them to switch communications with significantly reduced latency in comparison to conventional switching devices. In some embodiments, dual-mode optical switches 515 may constitute leaf switches 530 in a leaf-spine architecture additionally including one or more dual-mode optical spine switches 520.

In various embodiments, dual-mode optical switches may be capable of receiving both Ethernet protocol communications carrying Internet Protocol (IP packets) and communications according to a second, high-performance computing (HPC) link-layer protocol (e.g., Intel's Omni-Path Architecture's, InfiniBand™) via optical signaling media of an optical fabric. As reflected in FIG. 5, with respect to any particular pair of sleds 504A and 504B possessing optical signaling connectivity to the optical fabric, connectivity scheme 500 may thus provide support for link-layer connectivity via both Ethernet links and HPC links. Thus, both Ethernet and HPC communications can be supported by a single high-bandwidth, low-latency switch fabric. The embodiments are not limited to this example.

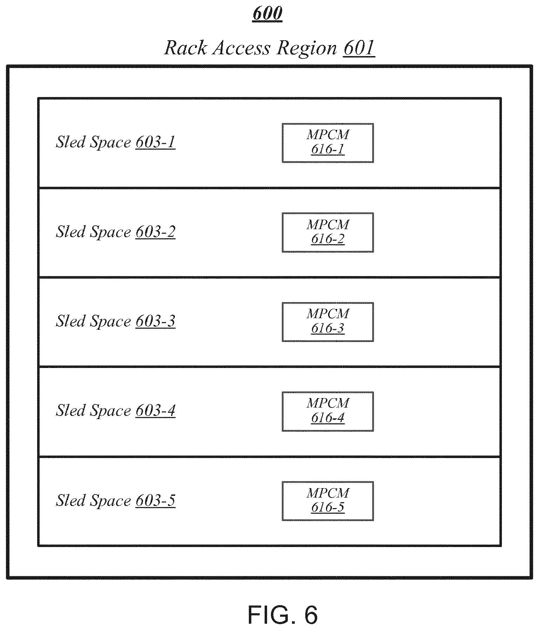

FIG. 6 illustrates a general overview of a rack architecture 600 that may be representative of an architecture of any particular one of the racks depicted in FIGS. 1 to 4 according to some embodiments. As reflected in FIG. 6, rack architecture 600 may generally feature a plurality of sled spaces into which sleds may be inserted, each of which may be robotically-accessible via a rack access region 601. In the particular non-limiting example depicted in FIG. 6, rack architecture 600 features five sled spaces 603-1 to 603-5. Sled spaces 603-1 to 603-5 feature respective multi-purpose connector modules (MPCMs) 616-1 to 616-5.

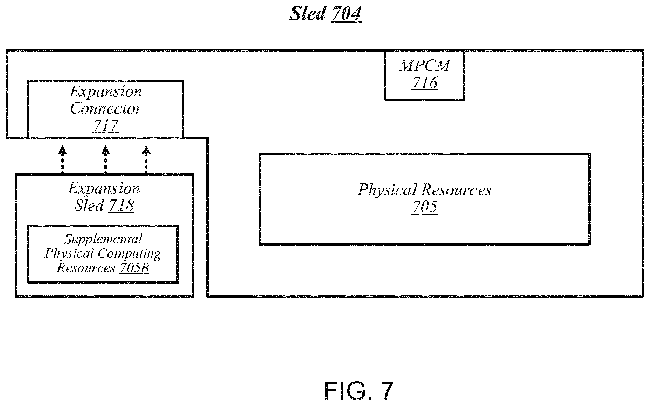

FIG. 7 illustrates an example of a sled 704 that may be representative of a sled of such a type. As shown in FIG. 7, sled 704 may comprise a set of physical resources 705, as well as an MPCM 716 designed to couple with a counterpart MPCM when sled 704 is inserted into a sled space such as any of sled spaces 603-1 to 603-5 of FIG. 6. Sled 704 may also feature an expansion connector 717. Expansion connector 717 may generally comprise a socket, slot, or other type of connection element that is capable of accepting one or more types of expansion modules, such as an expansion sled 718. By coupling with a counterpart connector on expansion sled 718, expansion connector 717 may provide physical resources 705 with access to supplemental computing resources 705B residing on expansion sled 718. The embodiments are not limited in this context.

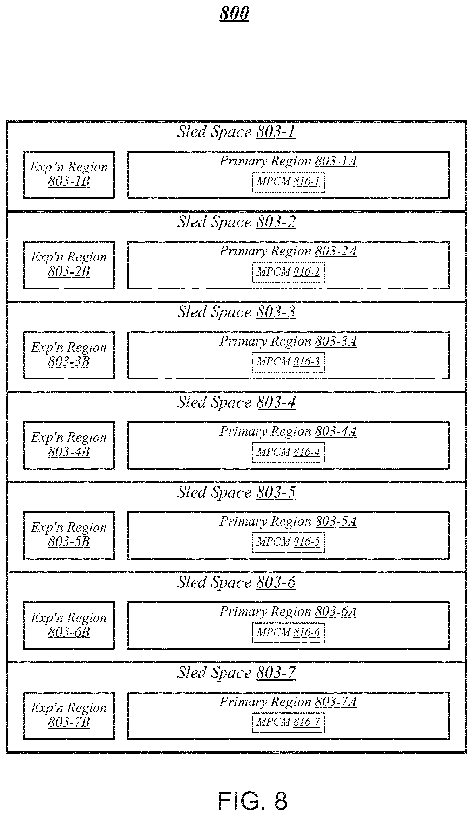

FIG. 8 illustrates an example of a rack architecture 800 that may be representative of a rack architecture that may be implemented in order to provide support for sleds featuring expansion capabilities, such as sled 704 of FIG. 7. In the particular non-limiting example depicted in FIG. 8, rack architecture 800 includes seven sled spaces 803-1 to 803-7, which feature respective MPCMs 816-1 to 816-7. Sled spaces 803-1 to 803-7 include respective primary regions 803-1A to 803-7A and respective expansion regions 803-1B to 803-7B. With respect to each such sled space, when the corresponding MPCM is coupled with a counterpart MPCM of an inserted sled, the primary region may generally constitute a region of the sled space that physically accommodates the inserted sled. The expansion region may generally constitute a region of the sled space that can physically accommodate an expansion module, such as expansion sled 718 of FIG. 7, in the event that the inserted sled is configured with such a module.

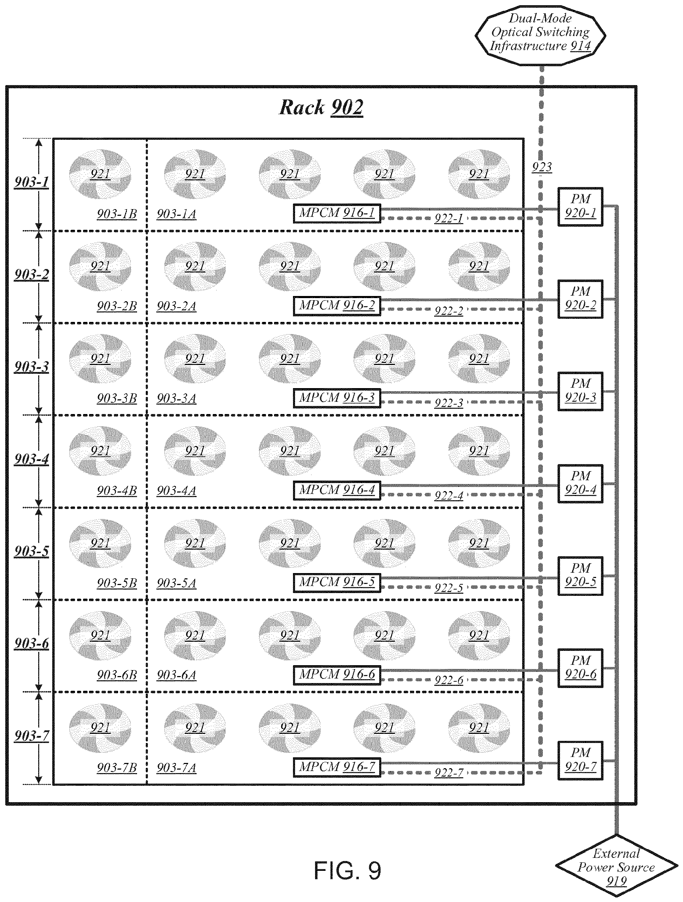

FIG. 9 illustrates an example of a rack 902 that may be representative of a rack implemented according to rack architecture 800 of FIG. 8 according to some embodiments. In the particular non-limiting example depicted in FIG. 9, rack 902 features seven sled spaces 903-1 to 903-7, which include respective primary regions 903-1A to 903-7A and respective expansion regions 903-1B to 903-7B. In various embodiments, temperature control in rack 902 may be implemented using an air cooling system. For example, as reflected in FIG. 9, rack 902 may feature a plurality of fans 919 that are generally arranged to provide air cooling within the various sled spaces 903-1 to 903-7. In some embodiments, the height of the sled space is greater than the conventional "1U" server height. In such embodiments, fans 919 may generally comprise relatively slow, large diameter cooling fans as compared to fans used in conventional rack configurations. Running larger diameter cooling fans at lower speeds may increase fan lifetime relative to smaller diameter cooling fans running at higher speeds while still providing the same amount of cooling. The sleds are physically shallower than conventional rack dimensions. Further, components are arranged on each sled to reduce thermal shadowing (i.e., not arranged serially in the direction of air flow). As a result, the wider, shallower sleds allow for an increase in device performance because the devices can be operated at a higher thermal envelope (e.g., 250W) due to improved cooling (i.e., no thermal shadowing, more space between devices, more room for larger heat sinks, etc.).

MPCMs 916-1 to 916-7 may be configured to provide inserted sleds with access to power sourced by respective power modules 920-1 to 920-7, each of which may draw power from an external power source 919. In various embodiments, external power source 921 may deliver alternating current (AC) power to rack 902, and power modules 920-1 to 920-7 may be configured to convert such AC power to direct current (DC) power to be sourced to inserted sleds. In some embodiments, for example, power modules 920-1 to 920-7 may be configured to convert 277-volt AC power into 12-volt DC power for provision to inserted sleds via respective MPCMs 916-1 to 916-7. The embodiments are not limited to this example.

MPCMs 916-1 to 916-7 may also be arranged to provide inserted sleds with optical signaling connectivity to a dual-mode optical switching infrastructure 914, which may be the same as - or similar to - dual-mode optical switching infrastructure 514 of FIG. 5. In various embodiments, optical connectors contained in MPCMs 916-1 to 916-7 may be designed to couple with counterpart optical connectors contained in MPCMs of inserted sleds to provide such sleds with optical signaling connectivity to dual-mode optical switching infrastructure 914 via respective lengths of optical cabling 922-1 to 922-7. In some embodiments, each such length of optical cabling may extend from its corresponding MPCM to an optical interconnect loom 923 that is external to the sled spaces of rack 902. In various embodiments, optical interconnect loom 923 may be arranged to pass through a support post or other type of load-bearing element of rack 902. The embodiments are not limited in this context. Because inserted sleds connect to an optical switching infrastructure via MPCMs, the resources typically spent in manually configuring the rack cabling to accommodate a newly inserted sled can be saved.

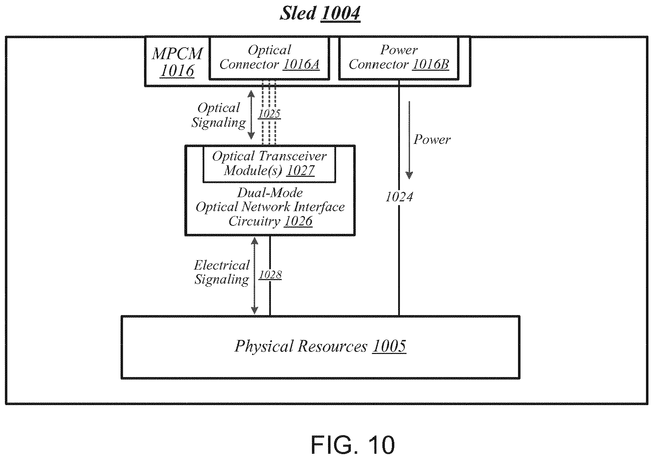

FIG. 10 illustrates an example of a sled 1004 that may be representative of a sled designed for use in conjunction with rack 902 of FIG. 9 according to some embodiments. Sled 1004 may feature an MPCM 1016 that comprises an optical connector 1016A and a power connector 1016B, and that is designed to couple with a counterpart MPCM of a sled space in conjunction with insertion of MPCM 1016 into that sled space. Coupling MPCM 1016 with such a counterpart MPCM may cause power connector 1016 to couple with a power connector comprised in the counterpart MPCM. This may generally enable physical resources 1005 of sled 1004 to source power from an external source, via power connector 1016 and power transmission media 1024 that conductively couples power connector 1016 to physical resources 1005.

Sled 1004 may also include dual-mode optical network interface circuitry 1026. Dual-mode optical network interface circuitry 1026 may generally comprise circuitry that is capable of communicating over optical signaling media according to each of multiple link-layer protocols supported by dual-mode optical switching infrastructure 914 of FIG. 9. In some embodiments, dual-mode optical network interface circuitry 1026 may be capable both of Ethernet protocol communications and of communications according to a second, high-performance protocol. In various embodiments, dual-mode optical network interface circuitry 1026 may include one or more optical transceiver modules 1027, each of which may be capable of transmitting and receiving optical signals over each of one or more optical channels. The embodiments are not limited in this context.

Coupling MPCM 1016 with a counterpart MPCM of a sled space in a given rack may cause optical connector 1016A to couple with an optical connector comprised in the counterpart MPCM. This may generally establish optical connectivity between optical cabling of the sled and dual-mode optical network interface circuitry 1026, via each of a set of optical channels 1025. Dual-mode optical network interface circuitry 1026 may communicate with the physical resources 1005 of sled 1004 via electrical signaling media 1028. In addition to the dimensions of the sleds and arrangement of components on the sleds to provide improved cooling and enable operation at a relatively higher thermal envelope (e.g., 250W), as described above with reference to FIG. 9, in some embodiments, a sled may include one or more additional features to facilitate air cooling, such as a heatpipe and/or heat sinks arranged to dissipate heat generated by physical resources 1005. It is worthy of note that although the example sled 1004 depicted in FIG. 10 does not feature an expansion connector, any given sled that features the design elements of sled 1004 may also feature an expansion connector according to some embodiments. The embodiments are not limited in this context.

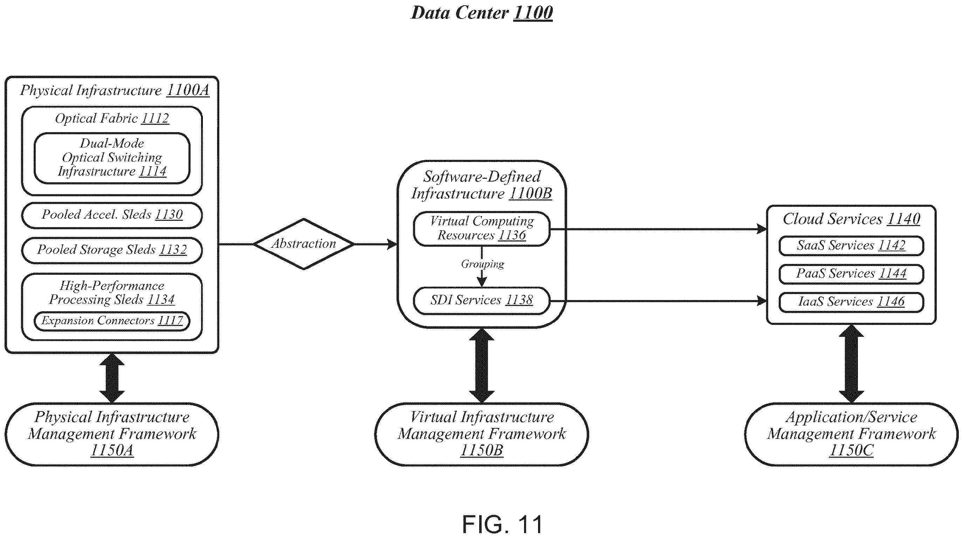

FIG. 11 illustrates an example of a data center 1100 that may generally be representative of one in/for which one or more techniques described herein may be implemented according to various embodiments. As reflected in FIG. 11, a physical infrastructure management framework 1150A may be implemented to facilitate management of a physical infrastructure 1100A of data center 1100. In various embodiments, one function of physical infrastructure management framework 1150A may be to manage automated maintenance functions within data center 1100, such as the use of robotic maintenance equipment to service computing equipment within physical infrastructure 1100A. In some embodiments, physical infrastructure 1100A may feature an advanced telemetry system that performs telemetry reporting that is sufficiently robust to support remote automated management of physical infrastructure 1100A. In various embodiments, telemetry information provided by such an advanced telemetry system may support features such as failure prediction/prevention capabilities and capacity planning capabilities. In some embodiments, physical infrastructure management framework 1150A may also be configured to manage authentication of physical infrastructure components using hardware attestation techniques. For example, robots may verify the authenticity of components before installation by analyzing information collected from a radio frequency identification (RFID) tag associated with each component to be installed. The embodiments are not limited in this context.

As shown in FIG. 11, the physical infrastructure 1100A of data center 1100 may comprise an optical fabric 1112, which may include a dual-mode optical switching infrastructure 1114. Optical fabric 1112 and dual-mode optical switching infrastructure 1114 may be the same as - or similar to - optical fabric 412 of FIG. 4 and dual-mode optical switching infrastructure 514 of FIG. 5, respectively, and may provide high-bandwidth, low-latency, multi-protocol connectivity among sleds of data center 1100. As discussed above, with reference to FIG. 1, in various embodiments, the availability of such connectivity may make it feasible to disaggregate and dynamically pool resources such as accelerators, memory, and storage. In some embodiments, for example, one or more pooled accelerator sleds 1130 may be included among the physical infrastructure 1100A of data center 1100, each of which may comprise a pool of accelerator resources - such as co-processors and/or FPGAs, for example - that is globally accessible to other sleds via optical fabric 1112 and dual-mode optical switching infrastructure 1114.

In another example, in various embodiments, one or more pooled storage sleds 1132 may be included among the physical infrastructure 1100A of data center 1100, each of which may comprise a pool of storage resources that is globally accessible to other sleds via optical fabric 1112 and dual-mode optical switching infrastructure 1114. In some embodiments, such pooled storage sleds 1132 may comprise pools of solid-state storage devices such as solid-state drives (SSDs). In various embodiments, one or more high-performance processing sleds 1134 may be included among the physical infrastructure 1100A of data center 1100. In some embodiments, high-performance processing sleds 1134 may comprise pools of high-performance processors, as well as cooling features that enhance air cooling to yield a higher thermal envelope of up to 250W or more. In various embodiments, any given high-performance processing sled 1134 may feature an expansion connector 1117 that can accept a far memory expansion sled, such that the far memory that is locally available to that high-performance processing sled 1134 is disaggregated from the processors and near memory comprised on that sled. In some embodiments, such a high-performance processing sled 1134 may be configured with far memory using an expansion sled that comprises low-latency SSD storage. The optical infrastructure allows for compute resources on one sled to utilize remote accelerator/FPGA, memory, and/or SSD resources that are disaggregated on a sled located on the same rack or any other rack in the data center. The remote resources can be located one switch jump away or two-switch jumps away in the spine-leaf network architecture described above with reference to FIG. 5. The embodiments are not limited in this context.

In various embodiments, one or more layers of abstraction may be applied to the physical resources of physical infrastructure 1100A in order to define a virtual infrastructure, such as a software-defined infrastructure 1100B. In some embodiments, virtual computing resources 1136 of software-defined infrastructure 1100B may be allocated to support the provision of cloud services 1140. In various embodiments, particular sets of virtual computing resources 1136 may be grouped for provision to cloud services 1140 in the form of software defined infrastructure (SDI) services 1138. Examples of cloud services 1140 may include - without limitation - software as a service (SaaS) services 1142, platform as a service (PaaS) services 1144, and infrastructure as a service (IaaS) services 1146.

In some embodiments, management of software-defined infrastructure 1100B may be conducted using a virtual infrastructure management framework 1150B. In various embodiments, virtual infrastructure management framework 1150B may be designed to implement workload fingerprinting techniques and/or machine-learning techniques in conjunction with managing allocation of virtual computing resources 1136 and/or SDI services 1138 to cloud services 1140. In some embodiments, virtual infrastructure management framework 1150B may use/consult telemetry data in conjunction with performing such resource allocation. In various embodiments, an application/service management framework 1150C may be implemented in order to provide QoS management capabilities for cloud services 1140. The embodiments are not limited in this context.

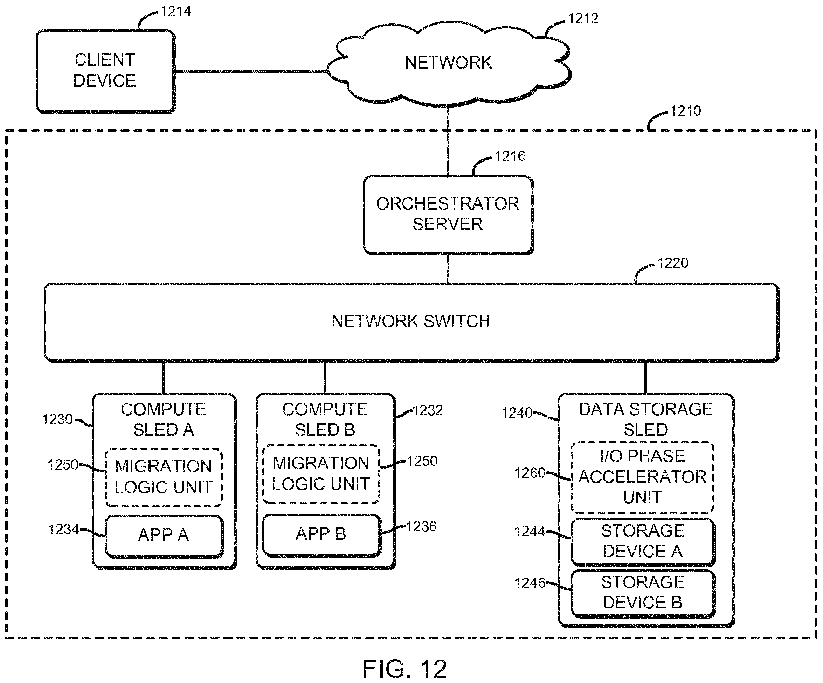

Referring now to FIG. 12, a system 1210 for migrating an I/O intensive phase of a workload from a compute sled to a data storage sled may be implemented in accordance with the data centers 100, 300, 400, 1100 described above with reference to FIGS. 1, 3, 4, and 11. In the illustrative embodiment, the system 1210 includes an orchestrator server 1216 in communication with a network switch 1220. The network switch 1220 is communicatively coupled to multiple sleds including compute sleds 1230, 1232, and a data storage sled 1240. One or more of the sleds 1230, 1232, 1240, may be grouped into a managed node, such as by the orchestrator server 1216, to collectively perform a workload, such as an application. A managed node may be embodied as an assembly of resources (e.g., physical resources 206), such as compute resources (e.g., physical compute resources 205-4), memory resources (e.g., physical memory resources 205-3), storage resources (e.g., physical storage resources 205-1), or other resources (e.g., physical accelerator resources 205-2), from the same or different sleds (e.g., the sleds 204-1, 204-2, 204-3, 204-4, etc.) or racks (e.g., one or more of racks 302-1 through 302-32). Further, a managed node may be established, defined, or "spun up" by the orchestrator server 1216 at the time a workload is to be assigned to the managed node or at any other time, and may exist regardless of whether any workloads are presently assigned to the managed node. The system 1210 may be located in a data center and provide storage and compute services (e.g., cloud services) to a client device 1214 that is in communication with the system 1210 through a network 1212. The orchestrator server 1216 may support a cloud operating environment, such as OpenStack, and managed nodes established by the orchestrator server 1216 may execute one or more applications or processes (i.e., workloads), such as in virtual machines or containers, on behalf of a user of the client device 1214. In the illustrative embodiment, the compute sled 1230 executes a workload 1234 (e.g., an application), and the compute sled 1232 executes another workload 1236 (e.g., another application). Further, the data storage sled 1240 includes multiple data storage devices 1244, 1246 (e.g., physical storage resources 205-1). While two compute sleds 1230, 1232 and a data storage sled 1240 are shown, it should be understood that other sleds, such as memory sleds and accelerator sleds may be present in the system 1210 and may be selectively added to or removed from a managed node (e.g., as determined by the orchestrator server 1216).

In operation, the system 1210 may utilize one or more migration logic units 1250 in a compute sled 1230, 1232 and/or an I/O accelerator unit 1260 in a data storage sled 1240 to perform migration of a workload from a compute sled 1230, 1232 to the data storage sled 1240 when the workload enters an I/O intensive phase, indicative a period of execution of the workload in which the amount of data to be sent through the network between the compute sled 1230 and the data storage sled 1240 satisfies a predefined threshold amount (e.g., 8 GB/s per second) and the congestion level of the network path between the compute sled 1230 and the data storage sled 1240 satisfies a predefined level of congestion (e.g., a predefined latency, a predefined utilization of the total throughput of the network). In the illustrative embodiment, the predefined level of congestion is a level of congestion in which, if the I/O intensive phase of the workload was executed on the compute sled 1230 and the data used by the I/O intensive phase was sent through the network 1212 between the compute sled 1230 and the data storage sled 1240, the speed of execution of the workload would be slowed. As a result, the workload may not produce a result in a time period specified in a service level agreement (SLA) with a customer. By migrating the workload to the data storage sled 1240 for execution, the I/O intensive phase may be executed faster, as the data utilized by the I/O intensive phase is local to the sled where the workload is executed. In the illustrative embodiment, the data storage sled 1240 may map a memory range of the main memory of the compute sled 1230 to the data storage sled 1240, such that data (e.g., a relatively small set of output data, compared to a relatively large amount of input data read from a data storage device local to the data storage sled 1240) may be read from and written to the main memory of the compute sled 1230 during execution of the I/O intensive phase on the data storage sled 1240.

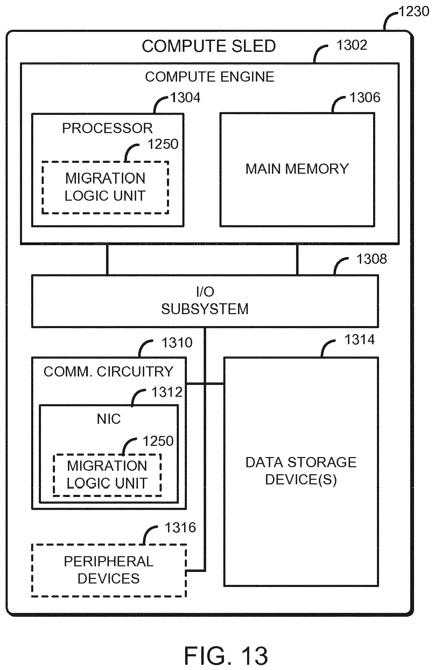

Referring now to FIG. 13, the compute sled 1230 may be embodied as any type of compute device capable of performing the functions described herein, including executing a workload (e.g., the workload 1234), determining whether the workload is likely to enter an I/O intensive phase in a predefined time period (e.g., as the next phase of the workload, within 10 milliseconds, etc.), determining whether the path through the network 1212 between the compute sled and the data sled 1240 is congested enough that the network 1212 would be a bottleneck in the execution speed of the workload (e.g., the network 1212 would be unable to transfer data from the data storage sled 1240 to the compute sled 1230 fast enough to avoid the compute sled 1230 consuming idle cycles that could otherwise be spent on executing the workload), migrating the workload to the data storage sled 1240 for execution of the I/O intensive phase, and resuming execution of the workload after the I/O intensive phase has completed.

As shown in FIG. 13, the illustrative compute sled 1230 includes a compute engine 1302, an input/output (I/O) subsystem 1308, communication circuitry 1310, and one or more data storage devices 1314. Of course, in other embodiments, the compute sled 1230 may include other or additional components, such as those commonly found in a computer (e.g., display, peripheral devices, etc.). Additionally, in some embodiments, one or more of the illustrative components may be incorporated in, or otherwise form a portion of, another component.

The compute engine 1302 may be embodied as any type of device or collection of devices capable of performing various compute functions described below. In some embodiments, the compute engine 1302 may be embodied as a single device such as an integrated circuit, an embedded system, a field-programmable gate array (FPGA), a system-on-a-chip (SOC), or other integrated system or device. Additionally, in some embodiments, the compute engine 1302 includes or is embodied as a processor 1304 and a memory 1306. The processor 1304 may be embodied as any type of processor capable of performing the functions described herein. For example, the processor 1304 may be embodied as a single or multi-core processor(s), a microcontroller, or other processor or processing/controlling circuit. In some embodiments, the processor 1304 may be embodied as, include, or be coupled to an FPGA, an application specific integrated circuit (ASIC), reconfigurable hardware or hardware circuitry, or other specialized hardware to facilitate performance of the functions described herein. The processor 1304 may include a migration logic unit 1250 briefly mentioned with reference to FIG. 12. The migration logic unit 1250 may be embodied as a specialized device, such as a co-processor, an FPGA, or an ASIC, for determining whether a workload is about to enter an I/O intensive phase (e.g., as indicated by top-down microarchitecture analysis method (TMAM) metrics), determining whether the present network congestion level indicates that the network would be a bottleneck to the execution of the workload, migrating the workload to the data storage sled 1240, including sending memory map data usable for mapping a region of the memory 1306 to the data storage sled 1240 to enable the data storage sled to read from and/or write to the main memory of the compute sled 1230 (e.g., in a memory region used by the workload 1234) as the workload is executed by the data storage sled 1240, and reformatting the data to a format usable by the data storage sled (e.g., by specialized logic in the data storage sled, such as the I/O accelerator unit 1260), such as by converting a file to a block or vice versa, changing a byte ordering of data, etc.

The main memory 1306 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4 (these standards are available at www.jedec.org). Such standards (and similar standards) may be referred to as DDR-based standards and communication interfaces of the storage devices that implement such standards may be referred to as DDR-based interfaces.

In one embodiment, the memory device is a block addressable memory device, such as those based on NAND or NOR technologies. A memory device may also include future generation nonvolatile devices, such as a three dimensional crosspoint memory device (e.g., Intel 3D XPoint™ memory), or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product.

In some embodiments, 3D crosspoint memory (e.g., Intel 3D XPoint™ memory) may comprise a transistor-less stackable cross point architecture in which memory cells sit at the intersection of word lines and bit lines and are individually addressable and in which bit storage is based on a change in bulk resistance. In some embodiments, all or a portion of the main memory 1306 may be integrated into the processor 1304. In operation, the main memory 1306 may store various software and data used during operation such as workload data, phase data, network congestion data, migration data, applications, programs, libraries, and drivers.

The compute engine 1302 is communicatively coupled to other components of the compute sled 1230 via the I/O subsystem 1308, which may be embodied as circuitry and/or components to facilitate input/output operations with the compute engine 1302 (e.g., with the processor 1304 and/or the main memory 1306) and other components of the compute sled 1230. For example, the I/O subsystem 1308 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 1308 may form a portion of a system-on-a-chip (SoC) and be incorporated, along with one or more of the processor 1304, the main memory 1306, and other components of the compute sled 1230, into the compute engine 1302.

The communication circuitry 1310 may be embodied as any communication circuit, device, or collection thereof, capable of enabling communications over the network 1212 between the compute sled 1230 and another compute device (e.g., the data storage sled 1240, the orchestrator server 1216, etc.). The communication circuitry 1310 may be configured to use any one or more communication technology (e.g., wired or wireless communications) and associated protocols (e.g., Ethernet, Bluetooth®, Wi-Fi®, WiMAX, etc.) to effect such communication.

The illustrative communication circuitry 1310 includes a network interface controller (NIC) 1312, which may also be referred to as a host fabric interface (HFI). The NIC 1312 may be embodied as one or more add-in-boards, daughter cards, network interface cards, controller chips, chipsets, or other devices that may be used by the compute sled 1230 to connect with another compute device (e.g., the data storage sled 1240, the orchestrator server 1216, etc.). In some embodiments, the NIC 1312 may be embodied as part of a system-on-a-chip (SoC) that includes one or more processors, or included on a multichip package that also contains one or more processors. In some embodiments, the NIC 1312 may include a local processor (not shown) and/or a local memory (not shown) that are both local to the NIC 1312. In such embodiments, the local processor of the NIC 1312 may be capable of performing one or more of the functions of the compute engine 1302 described herein. Additionally or alternatively, in such embodiments, the local memory of the NIC 1312 may be integrated into one or more components of the compute sled 1230 at the board level, socket level, chip level, and/or other levels. In some embodiments, the migration logic unit 1250 may be included in the NIC 1312.

The one or more illustrative data storage devices 1314, may be embodied as any type of devices configured for short-term or long-term storage of data such as, for example, memory devices and circuits, memory cards, hard disk drives, solid-state drives, or other data storage devices. Each data storage device 1314 may include a system partition that stores data and firmware code for the data storage device 1314. Each data storage device 1314 may also include an operating system partition that stores data files and executables for an operating system.

Additionally or alternatively, the compute sled 1230 may include one or more peripheral devices 1316. Such peripheral devices 1316 may include any type of peripheral device commonly found in a compute device such as a display, speakers, a mouse, a keyboard, and/or other input/output devices, interface devices, and/or other peripheral devices.

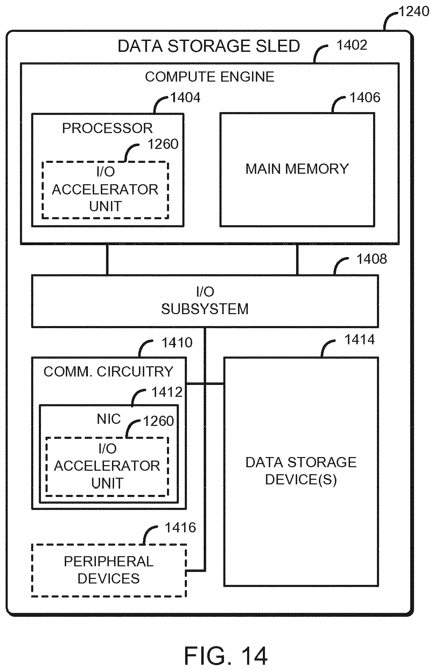

Referring now to FIG. 14, the data storage sled 1240 may be embodied as any type of compute device capable of performing the functions described herein, including reading and writing data to one or more data storage devices of the data storage sled 1240 in response to corresponding requests from a compute sled 1230, executing a workload that has been migrated to the data storage sled 1240 (e.g., an I/O intensive phase of a workload), sending output data to the compute sled as a result of performing the I/O intensive phase (e.g., by writing the output data to a region of the main memory 1306 of the compute sled 1230 that has been mapped for use by the workload when executed on the data storage sled 1240), and migrating the workload back to the compute sled 1230 after the I/O intensive phase has ended or when the congestion level of the network has decreased to a point where the network is no longer a bottleneck for the I/O intensive phase.

As shown in FIG. 14, the illustrative data storage sled 1240 includes a compute engine 1402, an input/output (I/O) subsystem 1408, communication circuitry 1410, and one or more data storage devices 1414. Of course, in other embodiments, the data storage sled 1240 may include other or additional components, such as those commonly found in a computer (e.g., display, peripheral devices, etc.). Additionally, in some embodiments, one or more of the illustrative components may be incorporated in, or otherwise form a portion of, another component.

The compute engine 1402 may be embodied as any type of device or collection of devices capable of performing various compute functions described below. In some embodiments, the compute engine 1402 may be embodied as a single device such as an integrated circuit, an embedded system, a field-programmable gate array (FPGA), a system-on-a-chip (SOC), or other integrated system or device. Additionally, in some embodiments, the compute engine 1402 includes or is embodied as a processor 1404 and a memory 1406. The processor 1404 may be embodied as any type of processor capable of performing the functions described herein. For example, the processor 1404 may be embodied as a single or multi-core processor(s), a microcontroller, or other processor or processing/controlling circuit. In some embodiments, the processor 1404 may be embodied as, include, or be coupled to an FPGA, an application specific integrated circuit (ASIC), reconfigurable hardware or hardware circuitry, or other specialized hardware to facilitate performance of the functions described herein. The processor 1404 may include an I/O accelerator unit 1260, which may be embodied as a specialized device, such as a co-processor, an FPGA, or an ASIC, for executing the I/O intensive phase of one or more workloads, using data in the local data storage device(s) 1414. In some embodiments, the I/O accelerator unit 1260 may map a memory region of the compute sled 1230 as local memory for the corresponding workload. As such, during execution of the workload, the I/O accelerator unit 1260 may cause data to be read from and/or written to the main memory 1306 of the compute sled 1406 (e.g., by interfacing with the migration logic unit 1250 of the compute sled 1230) as if the memory 1306 was local and without modifying the executable code of the workload. Additionally, the I/O accelerator unit 1260 may reformat data from the compute sled 1230 to a format usable by the I/O accelerator unit 1260 (e.g., converting a file to a block or vice versa, changing a byte ordering of data, etc.) to execute the I/O intensive phase of the workload.

The main memory 1406 may be embodied as any type of volatile (e.g., dynamic random access memory (DRAM), etc.) or non-volatile memory or data storage capable of performing the functions described herein. In operation, the main memory 1406 may store various software and data used during operation such as workload data, phase data, network congestion data, migration data, applications, programs, libraries, and drivers.

The compute engine 1402 is communicatively coupled to other components of the data storage sled 1240 via the I/O subsystem 1408, which may be embodied as circuitry and/or components to facilitate input/output operations with the compute engine 1402 (e.g., with the processor 1404 and/or the main memory 1406) and other components of the data storage sled 1240. For example, the I/O subsystem 1408 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 1408 may form a portion of a system-on-a-chip (SoC) and be incorporated, along with one or more of the processor 1404, the main memory 1406, and other components of the data storage sled 1240, into the compute engine 1402.

The communication circuitry 1410 may be embodied as any communication circuit, device, or collection thereof, capable of enabling communications over the network 1212 between the data storage sled 1240 and another compute device (e.g., the compute sleds 1230, 1232, the orchestrator server 1216, etc.). The communication circuitry 1310 may be configured to use any one or more communication technology (e.g., wired or wireless communications) and associated protocols (e.g., Ethernet, Bluetooth®, Wi-Fi®, WiMAX, etc.) to effect such communication.

The illustrative communication circuitry 1410 includes a network interface controller (NIC) 1412, which may also be referred to as a host fabric interface (HFI). The NIC 1412 may be embodied as one or more add-in-boards, daughter cards, network interface cards, controller chips, chipsets, or other devices that may be used by the data storage sled 1240 to connect with another compute device (e.g., the compute sleds 1240, 1242 the orchestrator server 1216, etc.). In some embodiments, the NIC 1412 may be embodied as part of a system-on-a-chip (SoC) that includes one or more processors, or included on a multichip package that also contains one or more processors. In some embodiments, the NIC 1412 may include a local processor (not shown) and/or a local memory (not shown) that are both local to the NIC 1412. In such embodiments, the local processor of the NIC 1412 may be capable of performing one or more of the functions of the compute engine 1402 described herein. Additionally or alternatively, in such embodiments, the local memory of the NIC 1412 may be integrated into one or more components of the compute sled 1240 at the board level, socket level, chip level, and/or other levels. In some embodiments, the I/O accelerator unit 1260 may be included in the NIC 1412.

The one or more illustrative data storage devices 1414, may be embodied as any type of devices configured for short-term or long-term storage of data such as, for example, memory devices and circuits, memory cards, hard disk drives, solid-state drives, or other data storage devices. Each data storage device 1414 may include a system partition that stores data and firmware code for the data storage device 1414. Each data storage device 1414 may also include an operating system partition that stores data files and executables for an operating system.

Additionally or alternatively, the data storage sled 1240 may include one or more peripheral devices 1416. Such peripheral devices 1416 may include any type of peripheral device commonly found in a compute device such as a display, speakers, a mouse, a keyboard, and/or other input/output devices, interface devices, and/or other peripheral devices.

The client device 1214, the orchestrator server 1216, and the compute sled 1232 may have components similar to those described in FIGS. 13 and 14. The description of those components of the compute sled 1230 and the data storage sled 1240 is equally applicable to the description of components of those devices and is not repeated herein for clarity of the description. Further, it should be appreciated that any of the client device 1214, the orchestrator server 1216, and the sleds 1230, 1232, 1240 may include other components, sub-components, and devices commonly found in a computing device, which are not discussed above in reference to the compute sled 1230 and the data storage sled 1240 and not discussed herein for clarity of the description.

As described above, the network switch 1220, the orchestrator server 1216, and the sleds 1230, 1232, 1240 are illustratively in communication via the network 1212, which may be embodied as any type of wired or wireless communication network, including global networks (e.g., the Internet), local area networks (LANs) or wide area networks (WANs), cellular networks (e.g., Global System for Mobile Communications (GSM), 3G, Long Term Evolution (LTE), Worldwide Interoperability for Microwave Access (WiMAX), etc.), digital subscriber line (DSL) networks, cable networks (e.g., coaxial networks, fiber networks, etc.), or any combination thereof.

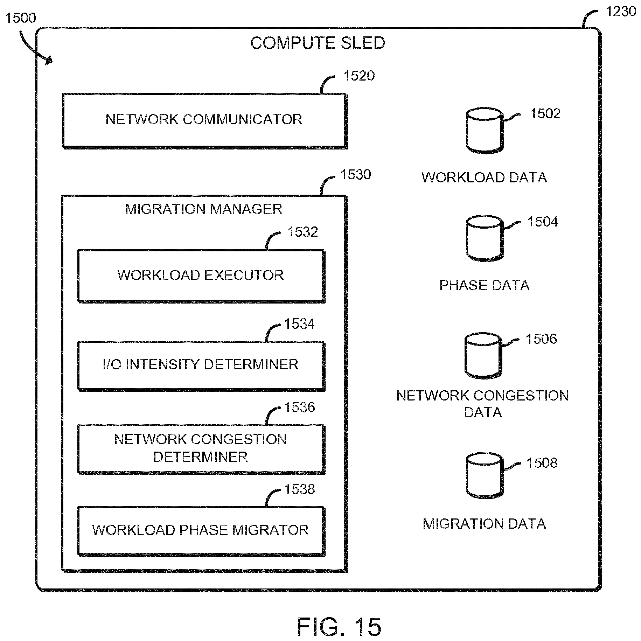

Referring now to FIG. 15, the compute sled 1230 may establish an environment 1500 during operation. The illustrative environment 1500 includes a network communicator 1520 and a migration manager 1530. Each of the components of the environment 1500 may be embodied as hardware, firmware, software, or a combination thereof. As such, in some embodiments, one or more of the components of the environment 1500 may be embodied as circuitry or a collection of electrical devices (e.g., network communicator circuitry 1520, migration manager circuitry 1530, etc.). It should be appreciated that, in such embodiments, one or more of the network communicator circuitry 1520 or migration manager circuitry 1530 may form a portion of one or more of the compute engine 1302, the migration logic unit 1250, the communication circuitry 1310, the I/O subsystem 1308, and/or other components of the compute sled 1230. In the illustrative embodiment, the environment 1500 includes workload data 1502, which may be embodied as any data indicative of workloads assigned to the compute sled 1230 to execute, including an identifier of each workload and executable code associated with each workload, and a memory region (e.g., a set of memory addresses) used by each workload to access (e.g., read and/or write) data in the main memory 1306, and an identifier of a data storage sled (e.g., the data storage sled 1240) used by each workload for accessing data storage. Additionally, the illustrative environment 1500 includes phase data 1504 which may be embodied as any data indicative of resource utilization characteristics of each phase of each workload (e.g., phase A exhibits relatively high processor utilization and low data storage utilization, phase B exhibits relatively low processor utilization and high data storage utilization, etc.), detected patterns of phases (e.g., phase A is typically followed by phase B, then phase A, then phase C, etc.), and/or metadata indicative of locations in the executable code of the workloads that mark the beginning and end of each phase. In addition, the environment 1500 includes network congestion data 1506, which may be embodied as any data indicative of the present data transfer capacity of the network 1212 (e.g., a latency, a bandwidth, a throughput, a fullness of a transmit buffer of the compute sled 1230, etc.). Additionally, the illustrative environment 1500 includes migration data 1508, which may be embodied as any data indicative of a determination of whether to migrate a workload to the data storage sled 1240 (e.g., as a function of whether an I/O intensive phase is predicted to occur within a predefined time window and whether the network 1212 is sufficiently congested to be a bottleneck to the execution of the I/O intensive phase on the compute sled 1230).

In the illustrative environment 1500, the network communicator 1520, which may be embodied as hardware, firmware, software, virtualized hardware, emulated architecture, and/or a combination thereof as discussed above, is configured to facilitate inbound and outbound network communications (e.g., network traffic, network packets, network flows, etc.) to and from the compute sled 1230, respectively. To do so, the network communicator 1520 is configured to receive and process data packets from one system or computing device (e.g., the orchestrator server 1216) and to prepare and send data packets to another computing device or system (e.g., the data storage sled 1240). Accordingly, in some embodiments, at least a portion of the functionality of the network communicator 1520 may be performed by the communication circuitry 1310, and, in the illustrative embodiment, by the NIC 1312.

The migration manager 1530, which may be embodied as hardware, firmware, software, virtualized hardware, emulated architecture, and/or a combination thereof, is configured to manage the migration of a workload to the data storage sled 1240 for execution if the workload is entering an I/O intensive phase and the network 1212 would be a bottleneck (e.g., transferring the data though the network between the data storage sled 1240 and the compute sled 1230 would slow the execution of the workload). To do so, in the illustrative embodiment, the migration manager 1530 includes a workload executor 1532, an I/O intensity determiner 1534, a network congestion determiner 1536, and a workload phase migrator 1538. The workload executor 1532, in the illustrative embodiment, is configured to execute the workload using data stored in the data storage device(s) 1414 of the data storage sled 1240. As the compute sled 1230 executes the workload, the workload may transition through multiple phases of resource utilization, as described above. The I/O intensity determiner 1534, in the illustrative embodiment, is configured to determine whether the amount of data to be accessed from the data storage device(s) 1414 of the data storage sled 1240 to execute a phase satisfies a threshold amount (e.g., a predefined number of gigabytes per second, etc.). In the illustrative embodiment, the I/O intensity determiner 1534 may monitor the resource utilization of the workload over time to identify the different phases, identify patterns in the phases, and/or metadata associated with sections of the executable code of the workload that demarcate different phases, to predict whether the workload will transition into an I/O intensive phase within a predefined time period. The network congestion determiner 1536, in the illustrative embodiment, is configured to determine the level of network congestion, such as by sending a test message to the data storage sled 1240 to determine a latency in receiving a response from the data storage sled 1240, identifying a fullness of a transmit buffer of the NIC 1312 of the compute sled 1230 (e.g., a fuller buffer may indicate more congestion), and/or by querying the orchestrator server 1216 for the network congestion data 1506. The workload phase migrator 1538, in the illustrative embodiment, is configured to determine whether to migrate the workload to the data storage sled 1240 as a function of whether the workload is predicted to enter an I/O intensive phase within a predefined time period (e.g., 10 milliseconds) and further as a function of the network congestion data 1506 (e.g., whether the network 1212 is congested to the point that the network 1212 would be a bottleneck to the execution of the workload in the I/O intensive phase). Further, in the illustrative embodiment, the workload phase migrator 1538 may facilitate migration of the workload to the data storage sled 1240 by providing memory map data that is usable by the data storage sled 1240 to map a region of the main memory 1306 of the compute sled 1230 as local memory to be used by the workload when the workload is executed on the data storage sled 1240. Additionally, the workload phase migrator 1538 may reformat data in the main memory 1306 to a different format that is usable by the data storage sled 1240 (e.g., by the I/O accelerator unit 1260 of the data storage sled 1240), as described herein.

It should be appreciated that each of the workload executor 1532, the I/O intensity determiner 1534, the network congestion determiner 1536, and the workload phase migrator 1538 may be separately embodied as hardware, firmware, software, virtualized hardware, emulated architecture, and/or a combination thereof. For example, the workload executor 1532 may be embodied as a hardware component, while the I/O intensity determiner 1534, the network congestion determiner 1536, and the workload phase migrator 1538 are embodied as virtualized hardware components or as some other combination of hardware, firmware, software, virtualized hardware, emulated architecture, and/or a combination thereof.

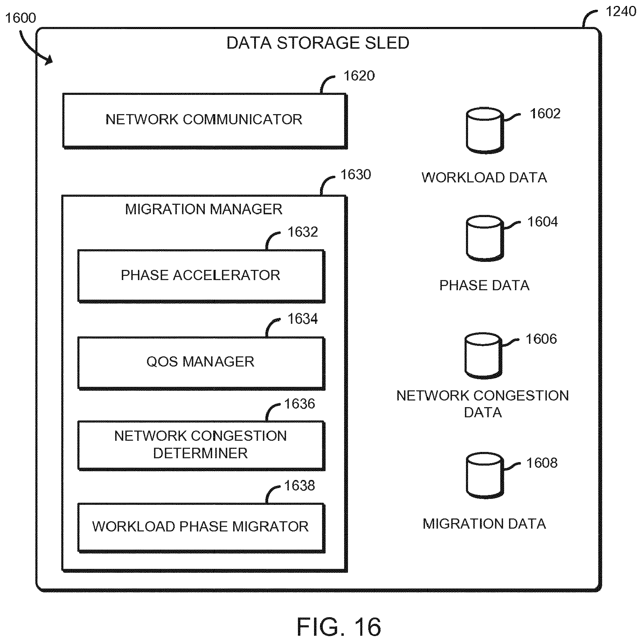

Referring now to FIG. 16, the data storage sled 1240 may establish an environment 1600 during operation. The illustrative environment 1600 includes a network communicator 1620 and a migration manager 1630. Each of the components of the environment 1600 may be embodied as hardware, firmware, software, or a combination thereof. As such, in some embodiments, one or more of the components of the environment 1600 may be embodied as circuitry or a collection of electrical devices (e.g., network communicator circuitry 1620, migration manager circuitry 1630, etc.). It should be appreciated that, in such embodiments, one or more of the network communicator circuitry 1620 or migration manager circuitry 1630 may form a portion of one or more of the compute engine 1402, the I/O accelerator unit 1260, the communication circuitry 1410, the I/O subsystem 1408, and/or other components of the data storage sled 1240. In the illustrative embodiment, the environment 1600 includes workload data 1602, which may be embodied as any data indicative of workloads assigned to the data storage sled 1240 to be executed (e.g., in the I/O intensive phase), memory map data indicative of a memory region of the corresponding compute sled 1230 that may be mapped as local memory as the workload is executed on the data storage sled 1240, and executable code to execute (e.g., executable code defining the I/O intensive phase of the workload). Additionally, the illustrative environment 1600 includes phase data 1604 which, in the illustrative embodiment, is similar to the phase data 1504 described above. In addition, the environment 1600 includes network congestion data 1606 which, in the illustrative embodiment, is similar to the network congestion data 1506, described above. Additionally, the illustrative environment 1600 includes migration data 1608, which is similar to the migration data 1508 described above with reference to FIG. 15, except the migration data 1608 is indicative of whether the workload should be migrated back to the corresponding compute sled 1230 (e.g., the network 1212 is not a bottleneck and/or the I/O intensive phase has ended).

In the illustrative environment 1600, the network communicator 1620, which may be embodied as hardware, firmware, software, virtualized hardware, emulated architecture, and/or a combination thereof as discussed above, is configured to facilitate inbound and outbound network communications (e.g., network traffic, network packets, network flows, etc.) to and from the data storage sled 1240, respectively. To do so, the network communicator 1620 is configured to receive and process data packets from one system or computing device (e.g., the orchestrator server 1216) and to prepare and send data packets to another computing device or system (e.g., the compute sled 1230). Accordingly, in some embodiments, at least a portion of the functionality of the network communicator 1620 may be performed by the communication circuitry 1410, and, in the illustrative embodiment, by the NIC 1412.

The migration manager 1630, which may be embodied as hardware, firmware, software, virtualized hardware, emulated architecture, and/or a combination thereof, is configured to facilitate the migration of a workload to the data storage sled 1240 and for migrating a workload back to the corresponding compute sled 1230, 1232 after the I/O intensive phase of the workload has completed or if the network congestion satisfies a predefined threshold (e.g., the network would no longer be a bottleneck to the execution of the I/O intensive phase of the workload). To do so, in the illustrative embodiment, the migration manager 1630 includes a phase accelerator 1632, a quality of service (QoS) manager 1634, a network congestion determiner 1636, and a workload phase migrator 1638. The phase accelerator 1632, in the illustrative embodiment, is configured to execute a workload that is in an I/O intensive phase (e.g., with the I/O accelerator unit 1260). The QoS manager 1634, in the illustrative embodiment, is configured to apply a quality of service (QoS) policy to throttle the usage of resources by the workloads executed on the data storage sled 1240 so that no workload dominates the usage of data storage sled resources to the detriment of other workloads (e.g., causing a workload to no longer satisfy a QoS target specified in a service level agreement (SLA)). The network congestion determiner 1636 is similar to the network congestion determiner 1536 described with reference to the environment 1500. Additionally, in the illustrative embodiment, the workload phase migrator 1638 is configured to facilitate the migration of the workload to the data storage sled 1240, such as by establishing a memory map that enables the workload to access the main memory 1306 of the compute sled 1230 as local memory. The workload phase migrator 1638 is also configured to determine when to migrate the workload back to the compute sled 1230, 1232. In the illustrative embodiment, the workload phase migrator 1638 is configured to migrate the workload back to the compute sled 1230, 1232 when the I/O intensive phase has been completed (e.g., the executable code of the I/O intensive phase has been completely executed, the amount of memory bandwidth utilized by the workload has fallen below a predefined amount, etc.) and/or when the network congestion has decreased to a level that the network 1212 would no longer be a bottleneck to the execution of the workload on the compute sled 1230, 1232.

It should be appreciated that each of the phase accelerator 1632, the QoS manager 1634, the network congestion determiner 1636, and the workload phase migrator 1638 may be separately embodied as hardware, firmware, software, virtualized hardware, emulated architecture, and/or a combination thereof. For example, the phase accelerator 1632 may be embodied as a hardware component, while the QoS manager 1634, the network congestion determiner 1636, and the workload phase migrator 1638 are embodied as virtualized hardware components or as some other combination of hardware, firmware, software, virtualized hardware, emulated architecture, and/or a combination thereof.

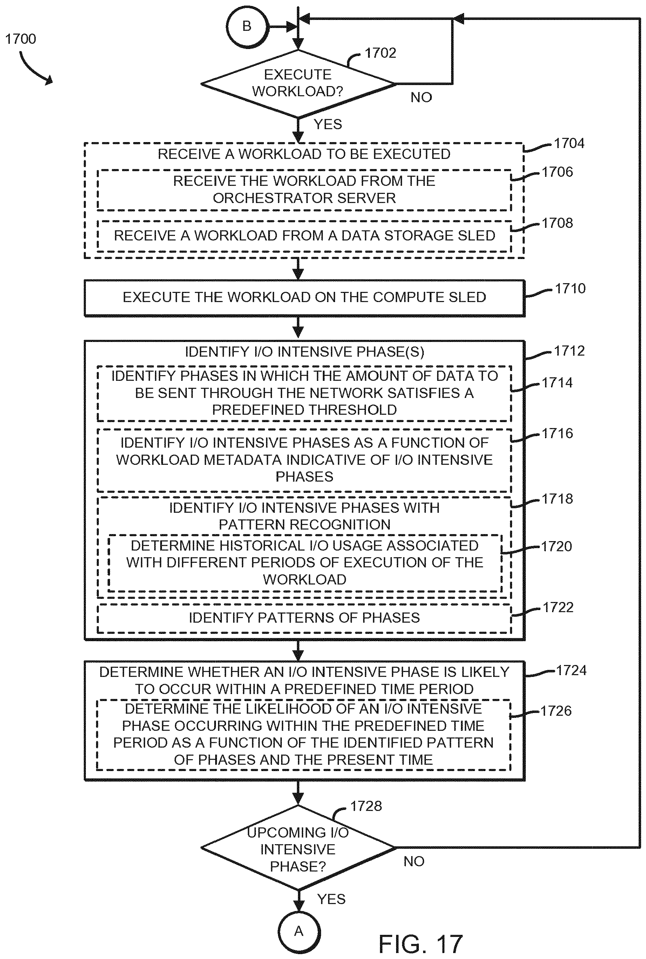

Referring now to FIG. 17, the compute sled 1230, in operation, may execute a method 1700 to enable offloading of I/O intensive phases of a workload to the data storage sled 1240. The method 1700 begins with block 1702 in which the compute sled 1230 determines whether to execute a workload. The compute sled 1230 may determine to enable offloading if the compute sled 1230 has been assigned to a managed node, is powered on and communicatively coupled to the data storage sled 1240, and/or based on other factors. Regardless, in response to a determination to execute a workload, the method 1700 advances to block 1704 in which the compute sled 1230 receives a workload to be executed (e.g., the compute sled 1230 receives the workload data 1502 identifying the workload and the executable code of the workload). In doing so, the compute sled 1230 may receive the workload from the orchestrator server 1216, as indicated in block 1706. In later iterations of the block 1704, the compute sled 1230 may receive a workload from the data storage sled 1240 (e.g., after the workload has been migrated to the data storage sled 1240 and the data storage sled 1240 has completed the I/O intensive phase), as indicated in block 1708.

In block 1710, the compute sled 1230 executes the workload, including accessing (e.g., reading from and/or writing to) the data storage sled 1240 and a region of the main memory 1306 of the compute sled 1230. Additionally, in block 1712, the compute sled 1230 identifies I/O intensive phases of the workload. In doing so, the compute sled 1230 may identify phases in which the amount of data sent through the network (e.g., between the data storage sled 1240 and the compute sled 1230) satisfies a predefined threshold, such as a predefined number of gigabytes per second, as indicated in block 1714. As indicated in block 1716, in identifying the I/O intensive phases, the compute sled 1230 identifies I/O intensive phases as a function of workload metadata indicative of the I/O intensive phases. For example, the metadata may be included with the executable code of the workload and may identify the sections of the executable code that mark the beginning and end of each phase. Further, the metadata may indicate the types and amounts of resources utilized by each phase. As indicated in block 1718, the compute sled 1230 identifies I/O intensive phases using pattern recognition. In doing so, and as indicated in block 1720, the compute sled 1230 may determine historical I/O usage associated with different periods of execution of the workload and identify changes in the I/O usage as changes in the phases of the workload. Further, as indicated in block 1722, the compute sled 1230 may identify patterns of phases (e.g., phase A, followed by phase B, then phase A, then phase C, then phase A, etc.).

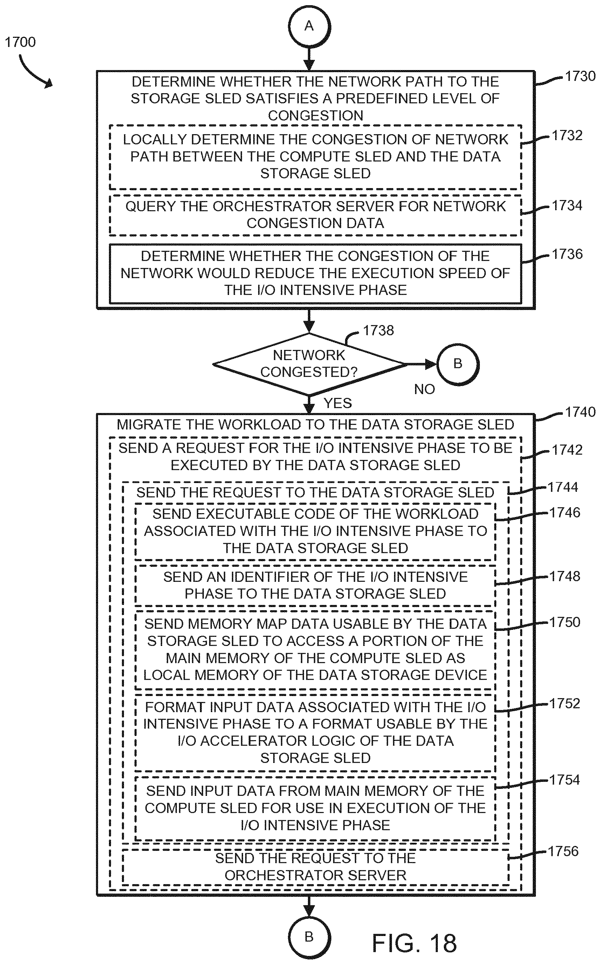

In block 1724, the compute sled 1230 determines whether an I/O intensive phase is likely to occur within a predefined time period. In doing so, the compute sled 1230, in the illustrative embodiment, determines a likelihood of an I/O intensive phase occurring within the predefined time period as a function of the identified pattern of phases and the present time, as indicated in block 1726. For example, if the compute sled 1230 has determined that phase B is I/O intensive, that phase B typically (e.g., 80% of the time) follows phase A, and that phase A has been executing for 90% of its typical phase residency (i.e., time period of execution) of 100 milliseconds, then the compute sled 1230 may determine that the I/O intensive phase (e.g., phase B) is likely to occur within the next 10 milliseconds. In block 1728, the compute sled 1230 determines the subsequent course of action as a function of whether there is an upcoming I/O intensive phase in the workload (e.g., whether the likelihood of an I/O intensive phase occurring within the next 10 milliseconds is greater than a predefined threshold, such as 50%). If the compute sled 1230 determines that there is not an upcoming I/O intensive phase, the method 1700 loops back to block 1702 in which the compute sled 1230 determines whether to continue to enable offloading of I/O intensive phases. Otherwise, the method 1700 advances to block 1730 of FIG. 18, in which the compute sled 1230 determines whether the network path to the data storage sled 1240 satisfies a predefined level of congestion (e.g., 50% of total capacity, a predefined latency, bandwidth, or throughput, etc.). In doing so, and as indicated in block 1732, in the illustrative embodiment, the compute sled 1230 may locally determine the congestion of the network path between the present compute sled 1230 and the data storage sled 1240, such as by sending a test message to the data storage sled 1240 and determining the latency to receive a response, determining an amount of time to transfer a test payload, measuring the throughput and/or latency for data actually used by the workload as it is being executed on the compute sled 1230, measuring a fullness of a transmission buffer of the NIC 1312, and/or based on other factors. As indicated in block 1734, the compute sled 1230 may additionally or alternatively query the orchestrator server 1216 for the network congestion data 1506. As indicated in block 1736, the compute sled 1230, in the illustrative embodiment, determines whether the congestion of the network 1212 would reduce the execution speed of the I/O intensive phase (e.g., the available data transmission capacity of the network 1212 is less than the predefined threshold amount from block 1714 of FIG. 17). In block 1738, the compute sled 1230 determines the subsequent course of action as a function of whether the network 1212 has been determined to be congested.

In response to a determination that the network is not congested, the method 1700 loops back to block 1702 of FIG. 17, in which the compute sled 1230 determines whether to continue to enable offloading of I/O intensive phases. Otherwise, the method 1700 advances to block 1740, in which the compute sled 1230 migrates the workload to the data storage sled 1240. In doing so, and as indicated in block 1742, the compute sled 1230 may send a request for the I/O intensive phase to be executed by the data storage sled 1240. The compute sled 1230 may send the request to the data storage sled 1240, as indicated in block 1744. In doing so, the compute sled 1230 may send executable code associated with the I/O intensive phase of the workload to the data storage sled 1240, as indicated in block 1746. As indicated in block 1748, the compute sled 1230 may send an identifier of the I/O intensive phase to the data storage sled 1240. Further, as indicated in block 1750, the compute sled 1230 may send memory map data usable by the data storage sled 1240 to access a portion of the main memory 1306 of the compute sled 1230 as local memory of the data storage sled 1240 (e.g., transparently to the workload). As indicated in block 1752, the compute sled 1230 may format input data associated with the I/O intensive phase to a format usable by the I/O accelerator unit 1260 of the data storage sled 1240. For example, the compute sled 1230 may convert a file to a block or vice versa, change a byte ordering of data, and/or perform other reformatting of data. The compute sled 1230 may also send input data from the main memory 1306 of the compute sled 1230 for use in execution of the I/O intensive phase (e.g., the reformatted data from block 1752), as indicated in block 1754. In general, the amount of input data from the main memory 1306 is smaller (e.g., an order of magnitude smaller) than the amount of data in the data storage device(s) 1414 to be used by the workload during the I/O intensive phase. As indicated in block 1756, rather than, or in addition to sending the migration request to the data storage sled 1240, the compute sled 1230 may send the request to the orchestrator server 1216 to then be sent to the data storage sled 1240. Subsequently, the method 1700 loops back to block 1702 of FIG. 17 in which the compute sled 1230 determines whether to continue to enable offloading of I/O intensive phases.

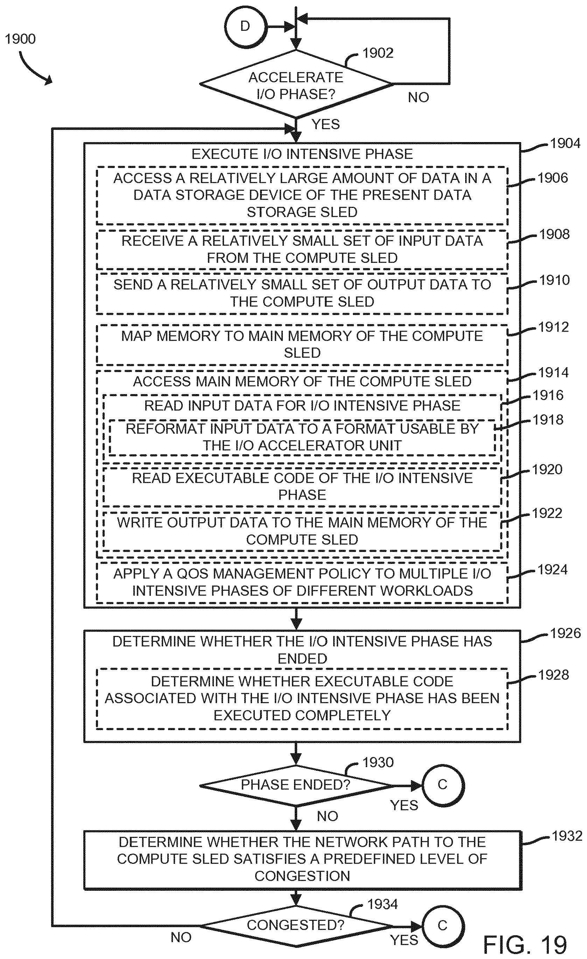

Referring now to FIG. 19, the data storage sled 1240, in operation, may execute a method 1900 to accelerate I/O intensive phases of workloads offloaded from compute sleds 1230, 1232. The method 1900 begins with block 1902 in which the data storage sled 1240 determines whether to accelerate one or more I/O intensive phases of workload(s). In the illustrative embodiment, the data storage sled 1240 may determine to accelerate an I/O intensive phase if the data storage sled 1240 has received a request to migrate a workload (e.g., the request of block 1740 described with reference to FIG. 18). In other embodiments, the data storage sled 1240 may make the determination based on other factors. Regardless, in response to a determination to accelerate an I/O intensive phase of a workload, the method 1900 advances to block 1904, in which the data storage sled 1240 executes the I/O intensive phase. In doing so, the data storage sled 1240 may access a relatively large amount of data in a data storage device 1414 of the data storage sled 1240 (e.g., tens of gigabytes), as indicated in block 1906. In addition, as indicated in block 1908, the data storage sled 1240 may receive a relatively small set of input data from the compute sled 1230 (e.g., 100 megabytes). As indicated in block 1910, the compute sled 1230 may send a relatively small set of output data to the compute sled 1230 (e.g., a 10 megabyte result of a computation). In the illustrative embodiment, and as indicated in block 1912, the data storage sled 1240 may map one or more local memory addresses to the main memory 1306 of the compute sled 1230 (e.g., using the memory map data from block 1750 of FIG. 18). In block 1914, in executing the I/O intensive phase, the data storage sled 1240 may access the main memory 1306 of the compute sled 1230. In accessing the main memory 1306 of the compute sled 1230, the data storage sled 1240 may read input data for the I/O intensive phase from the mapped memory, as indicated in block 1916. The data storage sled 1240 may reformat the input data to a format usable by the I/O accelerator unit (e.g., if the input is unusable in its present form and the compute sled 1230 did not reformat the data in block 1752 of FIG. 18), as indicated in block 1918. As indicated in block 1920, the data storage sled 1240 may read executable code of the I/O intensive phase with the mapped memory. In addition, the data storage sled 1240 may write output data to the main memory of the compute sled 1230 (e.g., the output data from block 1910), as indicated in block 1922. As indicated in block 1924, the data storage sled 1240 may apply a quality of service (QoS) policy to throttle the usage of resources by the workloads executed on the data storage sled 1240 so that no workload dominates the usage of data storage sled resources to the detriment of other workloads (e.g., causing a workload to no longer satisfy a QoS target specified in a service level agreement (SLA)).

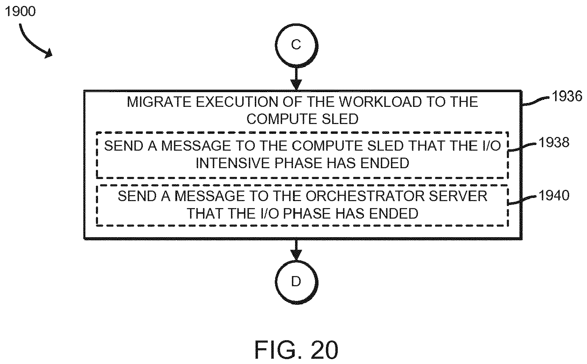

In block 1926, the data storage sled 1240 determines whether the I/O intensive phase has ended. For example, and as indicated in block 1928, the data storage sled determines whether executable code associated with the I/O intensive phase has been completely executed (e.g., the executable code sent by the compute sled 1230 in block 1746 of FIG. 18 has been completely executed). Subsequently, in block 1930, the data storage sled 1240 determines the next course of action as a function of whether the I/O intensive phase has ended. If not, the method 1900 continues to block 1932, in which the data storage sled 1240 determines whether the network path to the compute sled 1230 satisfies a predefined level of congestion (e.g., the congestion in the network would cause the workload to execute more slowly if it were performed on the compute sled 1230). In block 1934, the data storage sled 1240 determines the subsequent course of action as a function of whether the network satisfies the predefined level of congestion. If so, the method 1900 loops back to block 1904 to continue executing the I/O intensive phase on the data storage sled 1240. Otherwise, or if the data storage sled 1240 determines that the phase ended in block 1930, the method 1900 advances to block 1936 of FIG. 20, in which the data storage sled 1240 migrates execution of the workload to the compute sled 1230. In doing so, the data storage sled 1240 may send a message to the compute sled 1230 that the I/O intensive phase has ended, as indicated in block 1938 (e.g., thereby migrating execution of the workload back to the compute sled 1230). Additionally or alternatively, the data storage sled 1240 may send a message to the orchestrator server 1216 that the I/O phase has ended, as indicated in block 1940. Subsequently, the method 1900 loops back to block 1902 of FIG. 19, in which the data storage sled 1240 determines whether to continue accelerating one or more I/O intensive phases.

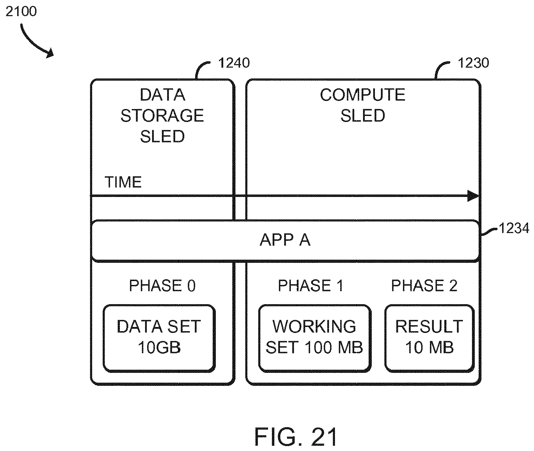

Referring now to FIG. 21, a diagram 2100 illustrates that over time, a workload 1234 may be executed on the data storage sled 1240 in one phase (e.g., phase 0) in which the amount of data operated on is relatively large (e.g., 10 gigabytes). In subsequent phases (e.g., phases 1 and 2) which are not I/O intensive, the workload is executed on the compute sled 1230 during which time the data operated on and produced is relatively small (e.g., 100 megabytes in phase 1 and 10 megabytes in phase 2).

### EXAMPLES

Illustrative examples of the technologies disclosed herein are provided below. An embodiment of the technologies may include any one or more, and any combination of, the examples described below.
Example 1 includes a compute sled comprising a compute engine to execute a workload that includes multiple phases, wherein each phase is indicative of a different resource utilization over a time period; identify an I/O intensive phase of the workload wherein an amount of data to be communicated through a network path between the compute sled and the data storage sled to execute the I/O intensive phase satisfies a predefined threshold; and migrate the workload to the data storage sled to execute the I/O intensive phase locally on the data storage sled.
Example 2 includes the subject matter of Example 1, and wherein the compute engine is further to send memory map data to the data storage sled, wherein the memory map data is usable by the data storage sled to access main memory of the compute sled as local memory as the I/O intensive phase is executed on the data storage sled.
Example 3 includes the subject matter of any of Examples 1 and 2, and wherein the compute engine is further to determine whether the I/O intensive phase will occur within a predefined time period; and wherein to migrate comprises to migrate, in response to a determination that the I/O intensive phase will occur within the predefined time period, the workload to the data storage sled.
Example 4 includes the subject matter of any of Examples 1-3, and wherein the compute engine is further to identify a pattern of phases over time as the workload is executed; and wherein to determine whether the I/O intensive phase will occur within a predefined time period comprises to determine a likelihood, as a function of a present time and the identified pattern of phases, that the I/O intensive phase will occur within the predefined time period; determine whether the likelihood satisfies a predefined threshold likelihood; and determine, in response to a determination that the likelihood satisfies the predefined threshold likelihood, that the I/O intensive phase will occur within the predefined time period.
Example 5 includes the subject matter of any of Examples 1-4, and wherein the compute engine is further to determine whether the network path between the compute sled and the data storage sled satisfies a predefined level of congestion; and wherein to migrate further comprises to migrate, in response to a determination that the network path satisfies the predefined level of congestion, the workload to the data storage sled.
Example 6 includes the subject matter of any of Examples 1-5, and wherein to determine whether the network path between the compute sled and the data storage sled satisfies a predefined level of congestion comprises to determine whether access of data on the data storage sled through the network path would reduce the execution speed of the I/O intensive phase.
Example 7 includes the subject matter of any of Examples 1-6, and wherein to identify the I/O intensive phase comprises to identify the I/O intensive phase as a function of workload metadata that identifies executable code associated with the I/O intensive phase.
Example 8 includes the subject matter of any of Examples 1-7, and wherein to identify the I/O intensive phase comprises to identify the I/O intensive phase with pattern recognition.
Example 9 includes the subject matter of any of Examples 1-8, and wherein to identify the I/O intensive phase with pattern recognition comprises to determine historical I/O usage associated with different periods of execution of the workload.
Example 10 includes the subject matter of any of Examples 1-9, and wherein to migrate the workload to the data storage sled comprises to send a request to the data storage sled to execute the I/O intensive phase of the workload.
Example 11 includes the subject matter of any of Examples 1-10, and wherein to send the request comprises to send executable code associated with the I/O intensive phase to the data storage sled.
Example 12 includes the subject matter of any of Examples 1-11, and wherein to send the request comprises to send input data from a main memory of the compute sled to the data storage sled for use in execution of the I/O intensive phase.
Example 13 includes the subject matter of any of Examples 1-12, and wherein the compute sled is further to reformat the input data to a format usable by an I/O accelerator unit of the data storage sled.
Example 14 includes a method comprising executing, by a compute sled, a workload that includes multiple phases, wherein each phase is indicative of a different resource utilization over a time period; identifying, by the compute sled, an I/O intensive phase of the workload wherein an amount of data to be communicated through a network path between the compute sled and the data storage sled to execute the I/O intensive phase satisfies a predefined threshold; and migrating, by the compute sled, the workload to the data storage sled to execute the I/O intensive phase locally on the data storage sled.
Example 15 includes the subject matter of Example 14, and further including sending, by the compute sled, memory map data to the data storage sled, wherein the memory map data is usable by the data storage sled to access main memory of the compute sled as local memory as the I/O intensive phase is executed on the data storage sled.
Example 16 includes the subject matter of any of Examples 14 and 15, and further including determining, by the compute sled, whether the I/O intensive phase will occur within a predefined time period; and wherein migrating comprises migrating, in response to a determination that the I/O intensive phase will occur within the predefined time period, the workload to the data storage sled.
Example 17 includes the subject matter of any of Examples 14-16, and further including identifying, by the compute sled, a pattern of phases over time as the workload is executed; and wherein determining whether the I/O intensive phase will occur within a predefined time period comprises determining a likelihood, as a function of a present time and the identified pattern of phases, that the I/O intensive phase will occur within the predefined time period; determining whether the likelihood satisfies a predefined threshold likelihood; and determining, in response to a determination that the likelihood satisfies the predefined threshold likelihood, that the I/O intensive phase will occur within the predefined time period.
Example 18 includes the subject matter of any of Examples 14-17, and further including determining, by the compute sled, whether the network path between the compute sled and the data storage sled satisfies a predefined level of congestion; and wherein migrating further comprises migrating, in response to a determination that the network path satisfies the predefined level of congestion, the workload to the data storage sled.
Example 19 includes the subject matter of any of Examples 14-18, and wherein determining whether the network path between the compute sled and the data storage sled satisfies a predefined level of congestion comprises determining whether access of data on the data storage sled through the network path would reduce the execution speed of the I/O intensive phase.
Example 20 includes the subject matter of any of Examples 14-19, and wherein identifying the I/O intensive phase comprises identifying the I/O intensive phase as a function of workload metadata that identifies executable code associated with the I/O intensive phase.
Example 21 includes the subject matter of any of Examples 14-20, and wherein identifying the I/O intensive phase comprises identifying the I/O intensive phase with pattern recognition.
Example 22 includes the subject matter of any of Examples 14-21, and wherein identifying the I/O intensive phase with pattern recognition comprises determining historical I/O usage associated with different periods of execution of the workload.
Example 23 includes the subject matter of any of Examples 14-22, and wherein migrating the workload to the data storage sled comprises sending a request to the data storage sled to execute the I/O intensive phase of the workload.
Example 24 includes the subject matter of any of Examples 14-23, and wherein sending the request comprises sending executable code associated with the I/O intensive phase to the data storage sled.
Example 25 includes the subject matter of any of Examples 14-24, and wherein sending the request comprises sending input data from main memory of the compute sled to the data storage sled for use in execution of the I/O intensive phase.
Example 26 includes the subject matter of any of Examples 14-25, and further including reformatting, by the compute sled, the input data to a format usable by an I/O accelerator unit of the data storage sled.
Example 27 includes one or more machine-readable storage media comprising a plurality of instructions stored thereon that, in response to being executed, cause a compute sled to perform the method of any of Examples 14-26.
Example 28 includes a network device comprising one or more processors; one or more memory devices having stored therein a plurality of instructions that, when executed by the one or more processors, cause the network device to perform the method of any of Examples 14-26.
Example 29 includes a compute sled comprising means for performing the method of any of Examples 14-26.
Example 30 includes a compute sled comprising means for executing a workload that includes multiple phases, wherein each phase is indicative of a different resource utilization over a time period; means for identifying an I/O intensive phase of the workload wherein an amount of data to be communicated through a network path between the compute sled and the data storage sled to execute the I/O intensive phase satisfies a predefined threshold; and means for migrating the workload to the data storage sled to execute the I/O intensive phase locally on the data storage sled.
Example 31 includes the subject matter of Example 30, and further including means for sending memory map data to the data storage sled, wherein the memory map data is usable by the data storage sled to access main memory of the compute sled as local memory as the I/O intensive phase is executed on the data storage sled.
Example 32 includes the subject matter of any of Examples 30 and 31, and further including means for determining whether the I/O intensive phase will occur within a predefined time period; and wherein the means for migrating comprises means for migrating, in response to a determination that the I/O intensive phase will occur within the predefined time period, the workload to the data storage sled.
Example 33 includes the subject matter of any of Examples 30-32, and further including means for identifying a pattern of phases over time as the workload is executed; and wherein the means for determining whether the I/O intensive phase will occur within a predefined time period comprises means for determining a likelihood, as a function of a present time and the identified pattern of phases, that the I/O intensive phase will occur within the predefined time period; means for determining whether the likelihood satisfies a predefined threshold likelihood; and means for determining, in response to a determination that the likelihood satisfies the predefined threshold likelihood, that the I/O intensive phase will occur within the predefined time period.
Example 34 includes the subject matter of any of Examples 30-33, and further including means for determining whether the network path between the compute sled and the data storage sled satisfies a predefined level of congestion; and wherein the means for migrating further comprises means for migrating, in response to a determination that the network path satisfies the predefined level of congestion, the workload to the data storage sled.
Example 35 includes the subject matter of any of Examples 30-34, and wherein the means for determining whether the network path between the compute sled and the data storage sled satisfies a predefined level of congestion comprises means for determining whether access of data on the data storage sled through the network path would reduce the execution speed of the I/O intensive phase.
Example 36 includes the subject matter of any of Examples 30-35, and wherein the means for identifying the I/O intensive phase comprises means for identifying the I/O intensive phase as a function of workload metadata that identifies executable code associated with the I/O intensive phase.
Example 37 includes the subject matter of any of Examples 30-36, and wherein the means for identifying the I/O intensive phase comprises means for identifying the I/O intensive phase with pattern recognition.
Example 38 includes the subject matter of any of Examples 30-37, and wherein the means for identifying the I/O intensive phase with pattern recognition comprises means for determining historical I/O usage associated with different periods of execution of the workload.
Example 39 includes the subject matter of any of Examples 30-38, and wherein the means for migrating the workload to the data storage sled comprises means for sending a request to the data storage sled to execute the I/O intensive phase of the workload.
Example 40 includes the subject matter of any of Examples 30-39, and wherein the means for sending the request comprises means for sending executable code associated with the I/O intensive phase to the data storage sled.
Example 41 includes the subject matter of any of Examples 30-40, and wherein the means for sending the request comprises means for sending input data from main memory of the compute sled to the data storage sled for use in execution of the I/O intensive phase.
Example 42 includes the subject matter of any of Examples 30-41, and further including means for reformatting the input data to a format usable by an I/O accelerator unit of the data storage sled.
Example 43 includes a data storage sled comprising a compute engine to execute an I/O intensive phase of a workload, wherein the I/O intensive phase is indicative of a period of execution in which an amount of data to be accessed from a data storage device of the data storage sled satisfies a predefined threshold; determine whether the I/O intensive phase has ended; and migrate, in response to a determination that the I/O intensive phase has ended, the execution of the workload to a compute sled.
Example 44 includes the subject matter of Example 43, and wherein the compute engine is further to determine whether a network path to the compute sled satisfies a predefined level of congestion; and migrate, in response to a determination that the network path does not satisfy the predefined level of congestion, execution of the workload to the compute sled.
Example 45 includes the subject matter of any of Examples 43 and 44, and wherein the compute engine is further to map a memory region to a main memory of the compute sled; and access data in the main memory of the compute sled as the I/O intensive phase is executed on the data storage sled.
Example 46 includes the subject matter of any of Examples 43-45, and wherein the compute engine is further to receive executable code associated with the I/O intensive phase from the compute sled; and wherein to execute the I/O intensive phase comprises to execute the received executable code.
Example 47 includes the subject matter of any of Examples 43-46, and wherein the compute engine is further to receive an input set of data from the compute sled; and reformat the input set of data to a format that is usable by an I/O accelerator unit of the data storage sled.
Example 48 includes the subject matter of any of Examples 43-47, and wherein the compute engine is further to execute multiple I/O intensive phases of different workloads concurrently; and apply a quality of service management policy to the execution of the workloads to maintain a target quality of service as the I/O intensive phases are executed.
Example 49 includes the subject matter of any of Examples 43-48, and wherein the compute engine is further to send output data from execution of the I/O intensive phase to the compute sled.
Example 50 includes the subject matter of any of Examples 43-49, and wherein the compute engine is to receive a first set of input data from the compute sled and access a second set of input data from a data storage device of the data storage sled, wherein the first and second sets of input data are usable to execute the I/O intensive phase and the second data set is larger than the first data set.
Example 51 includes the subject matter of any of Examples 43-50, and wherein to determine whether the I/O intensive phase has ended comprises to determine whether executable code associated with the I/O intensive phase has been completely executed.
Example 52 includes the subject matter of any of Examples 43-51, and wherein to execute the I/O intensive phase comprises to execute the I/O intensive phase with an I/O accelerator unit of the data storage sled.
Example 53 includes a method comprising executing, by a data storage sled, an I/O intensive phase of a workload, wherein the I/O intensive phase is indicative of a period of execution in which an amount of data to be accessed from a data storage device of the data storage sled satisfies a predefined threshold; determining, by the data storage sled, whether the I/O intensive phase has ended; and migrating, by the data storage sled and in response to a determination that the I/O intensive phase has ended, the execution of the workload to a compute sled.
Example 54 includes the subject matter of Example 53, and further including determining, by the data storage sled, whether a network path to the compute sled satisfies a predefined level of congestion; and migrating, by the data storage sled and in response to a determination that the network path does not satisfy the predefined level of congestion, execution of the workload to the compute sled.
Example 55 includes the subject matter of any of Examples 53 and 54, and further including mapping, by the data storage sled, a memory region to a main memory of the compute sled; and accessing data in the main memory of the compute sled as the I/O intensive phase is executed on the data storage sled.
Example 56 includes the subject matter of any of Examples 53-55, and further including receiving, by the data storage sled, executable code associated with the I/O intensive phase from the compute sled; and wherein executing the I/O intensive phase comprises executing the received executable code.
Example 57 includes the subject matter of any of Examples 53-56, and further including receiving, by the data storage sled, an input set of data from the compute sled; and reformatting, by the data storage sled, the input set of data to a format that is usable by an I/O accelerator unit of the data storage sled.
Example 58 includes the subject matter of any of Examples 53-57, and further including executing, by the data storage sled, multiple I/O intensive phases of different workloads concurrently; and applying, by the data storage sled, a quality of service management policy to the execution of the workloads to maintain a target quality of service as the I/O intensive phases are executed.
Example 59 includes the subject matter of any of Examples 53-58, and further including sending, by the data storage sled, output data from execution of the I/O intensive phase to the compute sled.
Example 60 includes the subject matter of any of Examples 53-59, and further including receiving, by the data storage sled, a first set of input data from the compute sled; and accessing, by the data storage sled, a second set of input data from a data storage device of the data storage sled, wherein the first and second sets of input data are usable to execute the I/O intensive phase and the second data set is larger than the first data set.
Example 61 includes the subject matter of any of Examples 53-60, and wherein determining whether the I/O intensive phase has ended comprises determining whether executable code associated with the I/O intensive phase has been completely executed.
Example 62 includes the subject matter of any of Examples 53-61, and wherein executing the I/O intensive phase comprises executing the I/O intensive phase with an I/O accelerator unit of the data storage sled.
Example 63 includes one or more machine-readable storage media comprising a plurality of instructions stored thereon that, in response to being executed, cause a data storage sled to perform the method of any of Examples 53-62.
Example 64 includes a data storage sled comprising means for performing the method of any of Examples 53-62.
Example 65 includes a data storage sled comprising means for executing an I/O intensive phase of a workload, wherein the I/O intensive phase is indicative of a period of execution in which an amount of data to be accessed from a data storage device of the data storage sled satisfies a predefined threshold; means for determining whether the I/O intensive phase has ended; and means for migrating, in response to a determination that the I/O intensive phase has ended, the execution of the workload to a compute sled.
Example 66 includes the subject matter of Example 65, and further including means for determining whether a network path to the compute sled satisfies a predefined level of congestion; and means for migrating, in response to a determination that the network path does not satisfy the predefined level of congestion, execution of the workload to the compute sled.
Example 67 includes the subject matter of any of Examples 65 and 66, and further including means for mapping a memory region to a main memory of the compute sled; and means for accessing data in the main memory of the compute sled as the I/O intensive phase is executed on the data storage sled.
Example 68 includes the subject matter of any of Examples 65-67, and further including means for receiving executable code associated with the I/O intensive phase from the compute sled; and wherein the means for executing the I/O intensive phase comprises means for executing the received executable code.
Example 69 includes the subject matter of any of Examples 65-68, and further including means for receiving an input set of data from the compute sled; and means for reformatting the input set of data to a format that is usable by an I/O accelerator unit of the data storage sled.
Example 70 includes the subject matter of any of Examples 65-69, and further including means for executing multiple I/O intensive phases of different workloads concurrently; and means for applying a quality of service management policy to the execution of the workloads to maintain a target quality of service as the I/O intensive phases are executed.
Example 71 includes the subject matter of any of Examples 65-70, and further including means for sending output data from execution of the I/O intensive phase to the compute sled.
Example 72 includes the subject matter of any of Examples 65-71, and further including means for receiving a first set of input data from the compute sled; and means for accessing a second set of input data from a data storage device of the data storage sled, wherein the first and second sets of input data are usable to execute the I/O intensive phase and the second data set is larger than the first data set.
Example 73 includes the subject matter of any of Examples 65-72, and wherein the means for determining whether the I/O intensive phase has ended comprises means for determining whether executable code associated with the I/O intensive phase has been completely executed.
Example 74 includes the subject matter of any of Examples 65-73, and wherein the means for executing the I/O intensive phase comprises means for executing the I/O intensive phase with an I/O accelerator unit of the data storage sled.

## Claims

1. A compute sled comprising:
a compute engine to:
execute a workload that includes multiple phases, wherein each phase is indicative of a different resource utilization over a time period;
identify an I/O intensive phase of the workload wherein an amount of data to be communicated through a network path between the compute sled and the data storage sled to execute the I/O intensive phase satisfies a predefined threshold; and
migrate the workload to the data storage sled to execute the I/O intensive phase locally on the data storage sled.

2. The compute sled of claim 1, wherein the compute engine is further to:
send memory map data to the data storage sled, wherein the memory map data is usable by the data storage sled to access main memory of the compute sled as local memory as the I/O intensive phase is executed on the data storage sled.

3. The compute sled of claim 1, wherein the compute engine is further to determine whether the I/O intensive phase will occur within a predefined time period; and
wherein to migrate comprises to migrate, in response to a determination that the I/O intensive phase will occur within the predefined time period, the workload to the data storage sled.

4. The compute sled of claim 3, wherein the compute engine is further to identify a pattern of phases over time as the workload is executed; and
wherein to determine whether the I/O intensive phase will occur within a predefined time period comprises to:
determine a likelihood, as a function of a present time and the identified pattern of phases, that the I/O intensive phase will occur within the predefined time period;
determine whether the likelihood satisfies a predefined threshold likelihood; and
determine, in response to a determination that the likelihood satisfies the predefined threshold likelihood, that the I/O intensive phase will occur within the predefined time period.

5. The compute sled of claim 3, wherein the compute engine is further to:
determine whether the network path between the compute sled and the data storage sled satisfies a predefined level of congestion; and
wherein to migrate further comprises to migrate, in response to a determination that the network path satisfies the predefined level of congestion, the workload to the data storage sled.

6. The compute sled of claim 5, wherein to determine whether the network path between the compute sled and the data storage sled satisfies a predefined level of congestion comprises to determine whether access of data on the data storage sled through the network path would reduce the execution speed of the I/O intensive phase.

7. The compute sled of claim 1, wherein to identify the I/O intensive phase comprises to identify the I/O intensive phase as a function of workload metadata that identifies executable code associated with the I/O intensive phase.

8. A method comprising:
executing, by a compute sled, a workload that includes multiple phases, wherein each phase is indicative of a different resource utilization over a time period;
identifying, by the compute sled, an I/O intensive phase of the workload wherein an amount of data to be communicated through a network path between the compute sled and the data storage sled to execute the I/O intensive phase satisfies a predefined threshold; and
migrating, by the compute sled, the workload to the data storage sled to execute the I/O intensive phase locally on the data storage sled.

9. The method of claim 8, further comprising:
sending, by the compute sled, memory map data to the data storage sled, wherein the memory map data is usable by the data storage sled to access main memory of the compute sled as local memory as the I/O intensive phase is executed on the data storage sled.

10. The method of claim 8, further comprising determining, by the compute sled, whether the I/O intensive phase will occur within a predefined time period; and
wherein migrating comprises migrating, in response to a determination that the I/O intensive phase will occur within the predefined time period, the workload to the data storage sled.

11. The method of claim 10, further comprising identifying, by the compute sled, a pattern of phases over time as the workload is executed; and
wherein determining whether the I/O intensive phase will occur within a predefined time period comprises:
determining a likelihood, as a function of a present time and the identified pattern of phases, that the I/O intensive phase will occur within the predefined time period;
determining whether the likelihood satisfies a predefined threshold likelihood; and
determining, in response to a determination that the likelihood satisfies the predefined threshold likelihood, that the I/O intensive phase will occur within the predefined time period.

12. The method of claim 10, further comprising:
determining, by the compute sled, whether the network path between the compute sled and the data storage sled satisfies a predefined level of congestion; and
wherein migrating further comprises migrating, in response to a determination that the network path satisfies the predefined level of congestion, the workload to the data storage sled.

13. The method of claim 12, wherein determining whether the network path between the compute sled and the data storage sled satisfies a predefined level of congestion comprises determining whether access of data on the data storage sled through the network path would reduce the execution speed of the I/O intensive phase.

14. The method of claim 8, wherein identifying the I/O intensive phase comprises identifying the I/O intensive phase as a function of workload metadata that identifies executable code associated with the I/O intensive phase.

15. One or more machine-readable storage media comprising a plurality of instructions stored thereon that, in response to being executed, cause a compute sled to perform the method of any of claims 8-14.
